# EUROPÄISCHE PATENTSCHRIFT

(11) **EP 3 853 303 B1**
(45) Veröffentlichungstag und Bekanntmachung des Hinweises auf die Patenterteilung: **15.06.2022**
(21) Anmeldenummer: 19768840.1
(22) Anmeldetag: 18.09.2019
(51) Int. Cl.: C08L 23/08, C08L 23/12, B29C 67/00

(54) **THERMOPLASTISCHE POLYMERPULVER UND DEREN ANWENDUNG FÜR DAS SELEKTIVE LASERSINTERN**
THERMOPLASTIC POLYMER POWDERS AND USE THEREOF FOR SELECTIVE LASER SINTERING
POUDRES POLYMÈRES THERMOPLASTIQUES ET LEUR UTILISATION POUR LE FRITTAGE SÉLECTIF PAR LASER

(30) Priorität: 21.09.2018 EP 18195867
(43) Veröffentlichungstag der Anmeldung: 28.07.2021
(73) Patentinhaber: INEOS Styrolution Group GmbH, 60325 Frankfurt (DE)
(72) Erfinder: WILHELMUS, Bianca, 63456 Hanau (DE); NIESSNER, Norbert, 67159 Friedelsheim (DE)
(74) Vertreter: Jacobi, Markus Alexander
(86) Internationale Anmeldenummer: PCT/EP2019/074960
(87) Internationale Veröffentlichungsnummer: WO 2020/058312

(56) Entgegenhaltungen:
- EP-A1- 2 177 557
- EP-A1- 3 074 465
- WO-A1-2009/112549
- WO-A1-2018/046582
- DE-A1-102013 224 275
- US-A1- 2003 003 315
- US-A1- 2018 071 980
- US-B1- 6 214 934

## Beschreibung

Die vorliegende Erfindung betrifft ein thermoplastisches Polymerpulver und dessen Verwendung als Werkstoff für das Selektive Lasersintern (SLS). Das Polymerpulver enthält ein teilkristallines Polyolefin, ein amorphes Styrol-Polymer und einen ausgewählten polymeren Verträglichkeitsvermittler sowie gegebenenfalls weitere Additive und/oder Hilfsstoffe. Im Polymerpulver liegen das teilkristalline Polymer, das amorphe Polymer und der Verträglichkeitsvermittler in Form eines Polymerblends vor. Die Erfindung betrifft zudem ein Verfahren zur Herstellung des thermoplastischen Polymerpulvers und ein Verfahren zum Selektiven Lasersintern (SLS) unter Verwendung des erfindungsgemäßen Polymerpulvers.

Beim Verfahren des Selektiven Lasersinterns (SLS) handelt es sich um ein so genanntes additives Fertigungsverfahren (Additive Manufacturing, AM). Die Verfahren der additiven Fertigung, wie beispielsweise das Selektive Lasersintern (SLS) und das Fused Deposition Modeling (FDM), zeichnen sich insbesondere dadurch aus, dass zur Fertigung des Bauteils kein Werkzeug erforderlich ist. Typischerweise werden additive Fertigungsverfahren zur Herstellung von kleinen Stückzahlen wie Prototypen, Mustern und Modellen verwendet (auch als Rapid Prototyping bezeichnet).

Das Selektive Lasersintern (SLS) ist ein Pulverbettverfahren, wobei dünne Schichten eines Polymerpulvers, welche typischerweise etwa 100 µm dick sind, in einem Bauraum bereitgestellt und mit Hilfe eines Laserstrahls ortsaufgelöst aufgeschmolzen werden. In verwandten Verfahren kann das Aufschmelzen mittels Infrarot-Strahlung oder mittels UV-Strahlung (z.B. UV-LED) erfolgen. Durch das schichtweise Schmelzen und Verfestigen der Pulverpartikel (Sintern) entsteht das Bauteil als Verbindung der einzelnen Schichten. Das Verfahren des Selektiven Lasersinterns und geeignete Polymerpulver werden unter anderem in Schmid, M., Selektives Lasersintern (SLS) mit Kunststoffen (Carl Hanser Verlag München 2015) beschrieben.

Das Verfahren des SLS findet typischerweise in einem beheizten Bauraum statt. Üblicherweise wird nach dem Aufbringen einer Pulverschicht im Bauraum, beispielsweise mittels eines Rakels oder einer Rolle, an den aufzuschmelzenden Stellen Energie durch die Belichtung mit einem Laserstrahl eingebracht. Oftmals wird ein CO₂Laser, ein Nd:YAG-Laser oder ein Faserlaser verwendet. Die danebenliegenden Polymerpartikel sollen idealerweise nicht mit aufschmelzen. Nach dem ortsaufgelösten Aufschmelzen der Polymerpartikel erstarrt das Polymermaterial wieder und bildet einen Teil des zu erstellenden Bauteils.

Nach dem vollständigen Aufschmelzen und anschließenden Wiedererstarren einer Bauteilschicht wird der Bauraum in der Regel abgesenkt, eine neue Pulverschicht aufgebracht und die Bauprozedur wiederholt. Durch wiederholtes Auftragen neuer Schichten und selektives Aufschmelzen kann so schichtweise das gewünschte Bauteil entstehen. Nicht geschmolzenes Pulver wird nach Abschluss des Aufbauverfahrens und nach Abkühlen des Bauraums typischerweise vom Bauteil abgetrennt.

Für das Selektive Lasersintern können prinzipiell teilkristalline oder amorphe Polymere eingesetzt werden. Bevorzugt werden teilkristalline Polymere beim SLS eingesetzt, da diese einen definierten Schmelzpunkt bzw. -bereich besitzen und so den Aufbau von definierten Bauteilen mit zufriedenstellenden mechanischen Eigenschaften ermöglichen. Es ist jedoch auch möglich, amorphe Polymere einzusetzen. Amorphe Polymere ergeben aber typischerweise keine dicht gesinterten, sondern poröse Bauteile, da amorphe Polymere keinen definierten Schmelzpunkt, sondern eine Glasübergangstemperatur und einen Erweichungsbereich aufweisen. Bauteile aus amorphen Polymeren, wie beispielsweise aus amorphem Polystyrol, sind im Allgemeinen porös, weisen ungenügende mechanische Festigkeit auf und werden daher überwiegend als Modelle für den Formguss verwendet.

Beim SLS werden überwiegend Polyamide (PA) eingesetzt. Ebenso können auch Polypropylen (PP), Polyoxymethylen (POM), Polylactid (PLA) oder Polystyrol (PS) mittels Selektiven Lasersinterns (SLS) zu Bauteilen verarbeitet werden. Verfahren des SLS unter Verwendung verschiedener Polymere sind unter anderem in WO 96/06881 beschrieben, wobei möglichst dichte Bauteile angestrebt werden.

Für die Anwendung im SLS werden an die Polymerpulver besondere Anforderungen gestellt, welche zum einen auf die Eigenschaften des Polymers (beispielsweise mechanische und optische Eigenschaften sowie Verhalten der Polymerschmelze) und zum anderen auf die Beschaffenheit des Polymerpulvers (beispielsweise Partikelgröße, Partikelgrößenverteilung, Fließ- und Rieselfähigkeit) abzielen.

Die mittlere Partikelgröße (Partikeldurchmesser) des Polymerpulvers muss für die Anwendung beim SLS unter der Schichtdichte der im Bauraum aufgebrachten Schicht liegen, typischerweise unter 200 µm, bevorzugt unter 100 µm. Zudem ist in der Regel eine gleichmäßige und nicht zu breite Partikelgrößenverteilung des Polymerpulvers für die Qualität des Bauteils vorteilhaft. Für die Verwendung beim SLS ist insbesondere entscheidend, dass sich die einzelnen Polymerpulver-Schichten gut und gleichmäßig aufbringen lassen.

Ferner ist wichtig, dass sich das Polymerpulver gut verdichten lässt, so dass Bauteile mit hoher Dichte und guten mechanischen Eigenschaften erhalten werden können. Insbesondere sind Partikelgröße und Partikelgrößenverteilung für eine optimale Auflösung der Bauteilstrukturen entscheidend.

Während des Bauprozesses ist es vorteilhaft, den Bauraum auf eine Temperatur bis kurz unterhalb der Schmelztemperatur des teilkristallinen Polymers oder der Glasübergangstemperatur des amorphen Polymers aufzuheizen, um nur noch einen kleinen Teil der zum Aufschmelzen nötigen Energie mit dem Laserstrahl selbst einbringen zu müssen.

Der Bauraum wird bei der Verwendung von teilkristallinen Polymeren zweckmäßigerweise auf eine Temperatur oberhalb der Kristallisationstemperatur des teilkristallinen Polymers geheizt, um vorzeitiges Kristallisieren und übermäßigen Verzug zu vermeiden. Unter Verzug wird typischerweise eine Abweichung des fertigen Bauteils von der Zielgeometrie verstanden. Der Abstand zwischen Kristallisationstemperatur und Schmelztemperatur wird als Verarbeitungsfenster bezeichnet. Das Verarbeitungsfenster sollte ausreichend groß sein, um einen stabilen und gut steuerbaren SLS-Prozess zu gewährleisten.

Bei Verwendung von amorphen Polymeren sollte der Bauraum in der Regel nicht oberhalb der Glasübergangstemperatur beheizt werden, um ein vorzeitiges Verflüssigen zu vermeiden.

Zur Verkürzung der Abkühlphase sind zum einen eine möglichst niedrige Bauraumtemperatur und zum anderen ein geringer Volumenschwund des Polymers beim Abkühlen wünschenswert. Unter Volumenschwund wird typischerweise die Abnahme des Volumens (und damit der Abmessungen) des Formteils durch die Abkühlung verstanden.

Das nach einem Bauprozess nicht gesinterte Polymerpulver wird normalerweise vom fertigen Bauteil abgetrennt und soweit möglich in weiteren Bauzyklen wiederverwendet. In der Praxis ist diese Wiederverwendung des Polymerpulvers (Recycling) jedoch deutlich eingeschränkt, da das Polymerpulver durch lange Bauzykluszeiten und hohe Temperaturen im Bauraum in seiner Beschaffenheit verändert wird, insbesondere verschlechtert sich die Fließfähigkeit des Polymerpulvers. Es muss daher in der Regel in hohen Anteilen frisches Polymerpulver zugegeben und oftmals ein hoher Anteil des gebrauchten Polymerpulvers entsorgt werden. Der Anteil des im Prozess wiederverwendeten Polymerpulvers wird durch die Recyclingquote angegeben.

Polyamide, insbesondere Polyamid 12 (Kurzbezeichnung PA12; Polylauryllactam), werden derzeit am häufigsten für das Selektive Lasersintern eingesetzt. Diese weisen allerdings einige gravierende Nachteile auf, wie geringe Recyclingquote, hoher Volumenschwund und dadurch bedingt langsames Abkühlen und hohe Bauzykluszeiten.

Die mechanischen Eigenschaften von SLS-Bauteilen bleiben oftmals hinter denen zurück, die mit anderen Herstellmethoden, wie etwa Spritzguss, erzielt werden können. Wünschenswert wäre es daher, ein Polymerpulver bereitzustellen, welches sich beim Selektiven Lasersintern besser verdichten lässt und Bauteile mit verbesserten mechanischen Eigenschaften ermöglicht. Darüber hinaus sind oftmals Bauteile mit glatteren Oberflächen wünschenswert.

Verfahren zur Herstellung von dreidimensionalen Bauteilen aus amorphen Polymeren durch Selektives Lasersintern werden in CN-B 101 319 075 und EP-A 2 736 964 beschrieben. Ein dem Selektiven Lasersintern ähnliches Verfahren wird in WO 2016/048357 beschrieben. Hier wird auf das Pulverbett an den zu druckenden Stellen ein lichtabsorbierendes Additiv aufgebracht, welches dann die zum Aufschmelzen des Polymers nötige Energie aus der Strahlung, beispielsweise aus einer LED, aufnimmt und an das zu schmelzende Polymer überträgt.

WO 2018/046582 beschreibt Polymerpulver und deren Einsatz beim SLS, wobei die Polymerpulver ein teilkristallines Polymer, insbesondere Polyamid, ein amorphes Styrol-Polymer und einen Verträglichkeitsvermittler, ausgewählt aus Styrol-Acrylnitril-Maleinsäureanhydrid-Terpolymeren, Styrol-N-Phenylmaleinimid-Maleinsäureanhydrid-Terpolymeren und Methylmethacrylat-Maleinsäureanhydrid-Copolymeren, enthalten.

CN-B 101 319 075 beschreibt die Verwendung von amorphen SAN-Copolymer zur Herstellung von Modellen für einen Formguss mittels SLS, wobei die Bauteile allerdings eine unerwünschte hohe Porosität aufweisen.

EP-A 2 736 964 nennt als einen weiteren Nachteil amorpher Polymere die hohe Viskosität der Schmelzen, die es notwendig macht, das Polymer deutlich über die Glasübergangstemperatur hinaus mit dem Laserstrahl zu erhitzen, um ein Zusammensintern der Partikel zu ermöglichen. Hierdurch kann der Schmelzbereich nicht mehr klar abgegrenzt werden und es werden Bauteile mit hoher Porosität erhalten.

Im Stand der Technik sind ebenso Verfahren der additiven Fertigung bekannt, bei denen ein Polymerpulver bestehend aus mehreren verschiedenen Polymeren verwendet wird. Die beschriebenen Verfahren sind jedoch typischerweise auf Polymere beschränkt, welche auf molekularer Ebene miteinander mischbar sind. Zudem weisen die Polymerblend-Pulver bzw. die daraus erzeugten Bauteile weiterhin die oben beschriebenen Nachteile auf.

DE-A 10 2012 015 804 beschreibt Polymerpulver als Werkstoff für die additive Fertigung durch schichtenweises Aufschmelzen in einem aufgeheizten Bauraum. Das Pulver ist eine Mischung (Blend) aus zwei oder mehr auf molekularer Ebene mischbaren Polymeren, wobei insbesondere Blends aus teilkristallinen Polymeren, beispielsweise PA11/PA12, PA6/PA610, PP/POM/PLA und PP/PA12, als günstig beschrieben werden.

EP-B 0 755 321 beschreibt ein Verfahren zur Herstellung eines dreidimensionalen Objekts, beispielsweise mittels SLS, wobei Blends aus miteinander molekular mischbaren Polymeren und Copolymeren verwendet werden. Die Komponenten werden in der Schmelze vermischt, wobei eine Vermischung der Polymere auf molekularer Ebene stattfindet. WO 2017/070061 beschreibt die Verwendung eines Polymerblends aus einem Polyolefin und einem zweiten thermoplastischen Polymer, insbesondere einem funktionalisierten Polyolefin, wobei das zweite Polymer dazu dient, die Absorption der Laserstrahlung im Polymerblend zu erhöhen. US-A 2011/0129682, EP-A 2 177 557 und WO 2015/081001 beschreiben SLS-Verfahren unter Verwendung eines Blends aus zwei Polymer-Komponenten, wobei Polyolefine (z.B. PP und PE) und selektiv hydrierte Styrol-Butadien-Blockcopolymere miteinander vermischt werden.

Polymerblends aus Polyolefinen und amorphen Polymeren, insbesondere amorphen Styrolpolymeren und Styrolcopolymeren, sind an sich bekannt und werden beispielsweise in US 3,894,117 und US 4,386,187 beschrieben. Aufgrund der Unverträglichkeit der Komponenten weisen binäre Blends aus Polyolefinen und Styrolpolymeren bzw. Styrolcopolymeren (z.B. SAN oder ABS) eine sehr geringe Zähigkeit auf. Die Zugabe von Verträglichkeitsvermittlern, wie in US 3,894,117 und US 4,386,187 beschrieben, kann die Zähigkeit der Blends verbessern. Als Verträglichkeitsvermittler eignen sich beispielsweise Blockcopolymere mit einer Polyolefin- und einer Polystyrol-Sequenz oder Polystyrol-Polybutadien-Polystyrol-Blockcopolymere.

Eine Aufgabe der vorliegenden Erfindung ist es, ein Polymerpulver für das Selektive Lasersintern (SLS) und für vergleichbare Technologien, wie etwa in WO 2016/048357 beschrieben, bereitzustellen, mit dem die oben beschriebenen Nachteile des Standes der Technik behoben werden können. Insbesondere sollen Bauteile mit guten mechanischen Eigenschaften und Oberflächeneigenschaften hergestellt werden, die wenig zum Verzug neigen. Zudem soll durch die Verwendung des erfindungsgemäßen Polymerpulvers eine Verkürzung der Bauzeit, insbesondere der Abkühlzeit ermöglicht werden, so dass Energie und Zeit eingespart werden können und einen höherer Anteil des Polymerpulvers wieder im Prozess verwendet werden kann (hohe Recyclingrate).

Überraschenderweise wurde gefunden, dass Blends, welche durch Compoundieren (Vermischen) von einem teilkristallinen Polyolefin A, einem amorphen Styrol-Polymer B und einem ausgewähltem Verträglichkeitsvermittler C hergestellt wurden, besonders vorteilhaft beim Selektiven Lasersintern und vergleichbaren Technologien eingesetzt werden können. Insbesondere wurde gefunden, dass Polymerpulver enthaltend ein teilkristallines Polyolefin (bevorzugt Polypropylen oder Polyethylen), Polystyrol (PS) oder ein Acrylnitril-Butadien-Styrol-Copolymer (ABS) oder ein Styrol-Acrylnitril-Copolymer (SAN) als amorphes Polymer und einen geeigneten Verträglichkeitsvermittler, vorteilhaft beim Lasersintern eingesetzt werden können. Geeignete Verträglichkeitsvermittler sind beispielsweise ausgewählt aus nichthydrierten Styrol-Butadien-Blockcopolymeren, Polyolefin-Styrol-Copolymeren oder Polyolefin-Acrylnitril-Styrol-Copolymeren. Der Verträglichkeitsvermittler bewirkt eine Vermischung der beiden an sich unverträglichen Polymerkomponenten auf molekularer Ebene zu einem interpenetrierenden Netzwerk. Da der Laserstrahl im SLS-Prozess stets nur einen kleinen Bereich des Polymerpulvers aufschmilzt, ist es vorteilhaft, wenn die im Polymerpulver vorhandenen Komponenten auf molekularer Ebene miteinander vermischt sind.

Es wurde darüber hinaus gefunden, dass sich durch die Verwendung eines Blends aus Polyolefinen mit einem styrolhaltigen Polymer (Polystyrol oder Styrol-Copolymer) und einem geeigneten Verträglichkeitsvermittler eine besonders hohe Oberflächengüte erzielen lässt. Insbesondere die Verwendung eines leichtfließenden und gut zu verflüssigenden Polystyrols oder Styrol-Copolymers, z.B. eines PS, ABS oder SAN, als amorphe Komponente im Polymerblend ermöglicht es, ein Bauteil mit geringer Porosität, wenig Verzugsneigung und hoher Oberflächengüte zu erzeugen.

Die vorliegende Erfindung betrifft ein thermoplastisches Polymerpulver P enthaltend (oder bestehend aus):
(A) 10 bis 89,9 Gew.-%, bevorzugt 30 bis 66 Gew.-%, bezogen auf das gesamte Polymerpulver P, mindestens eines teilkristallinen Polyolefins A, bevorzugt ausgewählt aus Polyethylen (PE) und Polypropylen (PP);
(B) 10 bis 89,9 Gew.-%, bevorzugt 30 bis 66 Gew.-%, bezogen auf das gesamte Polymerpulver P, mindestens eines amorphen Styrol-Polymers B, bevorzugt ausgewählt aus Styrol-Acrylnitril-Copolymeren (SAN), Acrylnitril-Butadien-Styrol-Copolymeren (ABS), Acrylat-Styrol-Acrylnitril-Copolymeren (ASA), Methylmethacrylat-Acrylnitril-Butadien-Styrol-Copolymeren (MABS), Methylmethacrylat-Butadien-Styrol-Copolymeren (MBS), α(alpha)-Methylstyrol-Acrylnitril-Copolymeren (AMSAN), Styrol-Methylmethacrylat-Copolymeren (SMMA), amorphem Polystyrol (PS), und schlagzäh-modifiziertem Polystyrol (HIPS);
(C) 0,1 bis 20 Gew.-%, bevorzugt 1 bis 10 Gew.-%, bezogen auf das gesamte Polymerpulver P, mindestens eines Verträglichkeitsvermittlers C, ausgewählt aus der Gruppe bestehend aus Styrol-Butadien-Blockcopolymeren, Styrol-Polyolefin-Copolymeren, Acrylnitril-Styrol-Polyolefin-Copolymeren und Acrylnitril-Styrol-Butadien-Polyolefin-Copolymeren;
(D) optional 0 bis 5 Gew.-%, bevorzugt 0 bis 3 Gew.-%, bezogen auf das gesamte Polymerpulver P, mindestens eines Additives und/oder Hilfsstoffes, bevorzugt ausgewählt aus der Gruppe bestehend aus Antioxidantien, UV-Stabilisatoren, Stabilisatoren gegen Wärmezersetzung, Peroxidzerstörern, Antistatika, Gleitmitteln, Rieselhilfsmitteln, Entformungsmitteln, Keimbildungsmitteln, Weichmachern, faser- oder pulverförmigen Füll- und Verstärkungsmitteln und Färbemitteln, wie Farbstoffe und Pigmente;

wobei die Summe der Gew.-% der Komponenten A, B, C und optional D zusammen 100 Gew.-% ergibt;
wobei das teilkristalline Polyolefin A, das amorphe Styrol-Polymer B und der Verträglichkeitsvermittler C (zusammen) in Form eines Polymerblends vorliegen;
und wobei das thermoplastische Polymerpulver P einen mittleren Partikeldurchmesser D₅₀ im Bereich von 5 bis 200 µm, bevorzugt 5 bis 150 µm, insbesondere bevorzugt 20 bis 100 µm, besonders bevorzugt von 30 bis 80 µm, aufweist.

Die erfindungsgemäßen Polymerpulver haben den Vorteil, dass die Bauraumtemperatur niedriger gewählt werden kann als bei anderen Polymerpulvern, beispielsweise Polyamid 12, Polyamid 11 oder Polyamid 6. Eine niedrigere Bauraumtemperatur bedingt eine verkürzte Abkühlzeit und dadurch eine verkürzte Gesamtzykluszeit. Darüber hinaus weisen die erfindungsgemäßen Polymerpulver wegen des Einflusses der amorphen Komponente im Polymerblend eine geringere Verzugsneigung auf und erlauben ein schnelleres Abkühlen als dies bei Polyamiden der Fall wäre. Dies verkürzt ebenfalls die Abkühlzeit und somit auch die gesamte Zykluszeit. Dies spart Energie und Zeit und ermöglicht dem Anwender einen effizienteren Einsatz des SLS-Verfahrens als mit vergleichbaren Polymerpulvern.

Die Bereitstellung des erfindungsgemäßen Polymerpulvers erfolgt durch Compoundierung (Vermischung) und anschließende Mikronisierung. Eine aufwändige und somit kostenintensive Nachbehandlung, wie etwa die Hydrierung in einem Autoklaven, entfällt.

Im Sinne der vorliegenden Erfindung meint "teilkristallines Polymer" ein Polymer, das einen gewissen Anteil an kristallinen Bereichen enthält, welche aus strukturiert angeordneten Polymerketten bestehen. Typischerweise liegt der Kristallinitätsgrad (Gewichtsanteil oder molarer Anteil der kristallinen Bereiche bezogen auf das gesamte Polymer) eines teilkristallinen Polymers im Bereich von 10 bis 80 %. Der Anteil der kristallinen Bereiche kann beispielsweise mit Hilfe bekannter thermischer Analyseverfahren (z.B. Differential Scanning Calorimetry DSC, Differenz-Thermoanalyse DTA) oder durch Röntgenstrukturanalyse bestimmt werden. Teilkristalline Polymere zeichnen sich in der Regel durch eine Glasübergangstemperatur und meist durch einen mehr oder weniger eng begrenzten Schmelzpunkt aus.

Im Sinne der vorliegenden Erfindung meint "amorphes Polymer" ein Polymer, das keinen oder einen nicht zu bestimmenden Anteil an geordneten, kristallinen Bereichen aufweist. Insbesondere liegt der Kristallinitätsgrad eines amorphen Polymers unter 10 %, bevorzugt unter 1 %. Amorphe Polymere weisen in der Regel eine Glasübergangstemperatur und einen breiten Erweichungsbereich auf.

Im Sinne der vorliegenden Erfindung bezeichnet der Begriff Polymerblend eine makroskopisch homogene Mischung aus mehreren verschiedenen Polymeren. Insbesondere wird ein Polymerblend durch Vermischen der verschiedenen Polymere (A, B und C) in der Schmelze hergestellt.

Der Ausdruck Polymer oder Copolymer enthaltend oder hergestellt aus Monomer oder Monomeren X wird vom Fachmann so verstanden, dass die Struktur des Polymers oder Copolymers in statistischer, blockweiser oder sonstiger Anordnung aufgebaut ist aus den Einheiten, welche den genannten Monomeren X entsprechen. Entsprechend versteht der Fachmann beispielsweise den Ausdruck Acrylnitril-Butadien-Styrol-Copolymer (ABS) als Polymer enthaltend bzw. aufgebaut aus den Monomer-Einheiten basierend auf Acrylnitril, Butadien, Styrol. Der Fachmann weiß, dass Polymere und Copolymere normalerweise neben den angegebenen Monomer-Einheiten in geringer Menge andere Strukturen, beispielsweise Start- und Endgruppen aufweisen können.

Im Sinne der vorliegenden Erfindung ist unter einem Verfahren des Selektiven Lasersinterns (SLS) ein Verfahren der additiven Fertigung zur Herstellung eines dreidimensionalen Körpers mit Hilfe einer für das SLS geeigneten Vorrichtung zu verstehen.

### Komponente A

Als erfindungsgemäße Komponente A können bekannte teilkristalline thermoplastische Polymere wie Polyethylen (PE) oder Polypropylen (PP) verwendet werden.

Die Komponente A ist im Polymerpulver zu 10 bis 89,9 Gew.-%, bevorzugt 30 bis 66 Gew.-%, oftmals 35 bis 60 Gew.-%, bezogen auf das gesamte Polymerpulver P, enthalten.

Als teilkristallines Polymer A können insbesondere auch Mischungen (Blends) der beschriebenen Polymere A eingesetzt werden.

Typischerweise kann als Komponente A ein kommerziell erhältliches Polyolefin, beispielsweise ein isotaktisches Polypropylen-Homopolymer (HPP, INEOS Olefins & Polymers), ein Polyethylen mit niedriger Dichte (LD-PE, INEOS Olefins & Polymers), ein lineares Polyolefin mit niedriger Dichte (LLD-PE, INEOS Olefins & Polymers), ein Polyolefin mit mittlerer Dichte (MD-PE, INEOS Olefins & Polymers), ein Polyethylen mit hoher Dichte (HD-PE, INEOS Olefins & Polymers) oder ein Polypropylen-Polyethylen-Copolymer eingesetzt werden.

In einer bevorzugten Ausführungsform handelt es sich bei dem teilkristallinen Polyolefin A um mindestens ein Polymer ausgewählt aus Polyethylen, Polypropylen und Polypropylen-Polyethylen-Copolymeren, besonders bevorzugt um isotaktisches Polypropylen.

Typischerweise weisen als teilkristallines Polyolefin A geeignete Polypropylene einen Schmelzflussindex (MFR, 230°C, 2.16 kg, ISO1133) im Bereich von 2 bis 100 g/10 min, bevorzugt 5 bis 50 g/10 min, auf.

Typischerweise weisen als teilkristallines Polyolefin A geeignete Polyethylene einen Schmelzflussindex (MFR, 190 °C, 2.16 kg, ISO1133) im Bereich von 0.1 bis 50 g/10 min, bevorzugt 0.25 bis 30 g/10 min, besonders bevorzugt 0.5 bis 10 g/10 min auf.

### Komponente B

Typischerweise handelt es sich bei dem amorphen Styrol-Polymer B um ein amorphes Styrol-Homopolymer und/oder amorphes Styrol-Copolymer, wobei Styrol ganz oder teilweise durch andere vinylaromatischen Monomere, insbesondere alpha-Methylstyrol, para-Methylstyrol und/oder C₁-C₄-Alkylstyrol ersetzt sein kann. Bevorzugt handelt es sich bei dem amorphen Styrol-Polymer B um ein Polymer oder Copolymer umfassend mindestens 10 Gew.-%, bevorzugt mindestens 20 Gew.-%, besonders bevorzugt mindestens 40 Gew.-%, bezogen auf das Polymer B, Styrol und/oder alpha-Methylstyrol.

Bevorzugt ist als Styrol-Polymer oder Styrol-Copolymer im Sinne der Erfindung ein Polymer umfassend mindestens 10 Gew.-% Styrol und/oder alpha-Methylstyrol zu verstehen, wobei teilkristalline Styrol-Polymere (isotaktisches und syndiotaktisches Polystyrol) ausgenommen sind.

Als erfindungsgemäße Komponente B können bekannte amorphe thermoplastische Styrol-Polymere und/oder Styrol-Copolymere eingesetzt werden. In einer bevorzugten Ausführungsform handelt es sich bei dem amorphen Styrol-Polymer B um mindestens ein Polymer ausgewählt aus Styrol-Acrylnitril-Copolymeren (SAN), Acrylnitril-Butadien-Styrol-Copolymeren (ABS), Acrylat-Styrol-Acrylnitril-Copolymeren (ASA), Methylmethacrylat-Acrylnitril-Butadien-Styrol-Copolymeren (MABS), Methylmethacrylat-Butadien-Styrol-Copolymeren (MBS), α(alpha)-Methylstyrol-Acrylnitril-Copolymeren (AMSAN), Styrol-Methylmethacrylat-Copolymeren (SMMA), amorphem Polystyrol (PS) und schlagzäh-modifiziertem Polystyrol (HIPS).

Die genannten Styrol-Copolymere sind kommerziell erhältlich, beispielsweise von INEOS Styrolution.

Die Komponente B ist im Polymerpulvern P in der Regel von 10 bis 89 Gew.-%, bevorzugt 30 bis 66 Gew.-%, bezogen auf das gesamte Polymerpulver, enthalten.

In einer bevorzugten Ausführungsform handelt es sich bei dem amorphen thermoplastischen Styrol-Polymer B um ein schlagzäh-modifiziertes Polystyrol (oder auch als kautschukmodifiziertes Polystyrol bezeichnet) (High Impact Polystyrene Resin HIPS), enthaltend bevorzugt einen Polybutadien-Kautschuk und/oder einen Styrol-Butadien-Kautschuk. Beispielsweise können HIPS-Polymere vom Typ INEOS Styrolution^{®} PS HIPS (INEOS Styrolution, Frankfurt) eingesetzt werden.

In einer bevorzugten Ausführungsform handelt es sich bei dem amorphen Styrol-Polymer B um mindestens ein Styrol-Polymer oder Styrol-Copolymer, welches eine Schmelz-Volumenfließrate, gemessen gemäß ISO 1133 (220°C / Belastung von 10 kg oder 200°C / Belastung von 5 kg), im Bereich von 2 bis 60 cm³/10 min, bevorzugt 5 bis 40 cm³/10 min aufweist.

Besonders bevorzugt ist der Einsatz von leicht fließenden Styrol-Copolymeren als amorphes Polymer B, insbesondere eines Acrylnitril-Butadien-Styrol-Copolymers (ABS) mit einer Schmelz-Volumenfließrate, gemessen gemäß ISO 1133 (220°C und Belastung von 10 kg) im Bereich von 5 bis 40 cm³/10 min.

In einer weiteren bevorzugten Ausführungsform handelt es sich bei dem amorphen Styrol-Polymer B um mindestens ein ABS-Copolymer enthaltend (bevorzugt bestehend aus):
B1: 5 bis 95 Gew.-%, bevorzugt 40 bis 80 Gew.-%, mindestens eines thermoplastischen Copolymers B1 hergestellt aus:
   B1a: 50 bis 95 Gew.-%, bevorzugt 65 bis 80 Gew.-%, besonders bevorzugt 69 bis 80 Gew.-%, bezogen auf das Copolymer B1, eines Monomers B1a, ausgewählt aus Styrol, α-Methylstyrol oder Mischungen von Styrol und mindestens einem weiteren Monomer ausgewählt aus α-Methylstyrol, p-Methylstyrol und (Meth)acrylsäure-C₁-C₈-alkylester (z.B. Methylmethacrylat, Ethylmethacrylat, n-Butylacrylat, t-Butylacrylat),
   B1b: 5 bis 50 Gew.-%, bevorzugt 20 bis 35 Gew.-%, besonders bevorzugt 20 bis 31 Gew.-%, bezogen auf das Copolymer B1, eines Monomers B1b, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexymaleimid und N-Phenylmaleimid),
B2: 5 bis 95 Gew.-%, bevorzugt 20 bis 60 Gew.-%, mindestens eines Pfropfcopolymers B2, enthaltend:
   B2a: 40 bis 85 Gew.-%, bevorzugt 50 bis 80 Gew.-%, besonders bevorzugt 55 bis 70 Gew.-%, bezogen auf das Pfropfcopolymer B2, mindestens einer Pfropfgrundlage B2a, welche erhalten wird durch Emulsionspolymerisation von:
      B2a1: 50 bis 100 Gew.-%, bevorzugt 80 bis 100 Gew.-%, bezogen auf die Pfropfgrundlage B2a, Butadien,
      B2a2: 0 bis 50 Gew.-%, bevorzugt 0 bis 20 Gew.-%, besonders bevorzugt 0 bis 10 Gew.-%, bezogen auf die Pfropfgrundlage B2a, mindestens eines weiteren Monomers B2a2 ausgewählt aus Styrol, α-Methylstyrol, Acrylnitril, Methacrylnitril, Isopren, Chloropren, C₁-C₄-Alkylstyrol, C₁-C₈-Alkyl(meth)acrylat, Alkylenglykol-di(meth)acrylat und Divinylbenzol;
      wobei die Summe B2a1 + B2a2 gerade 100 Gew.-% ergibt; und
   B2b: 15 bis 60 Gew.-%, bevorzugt 20 bis 50 Gew.-%, besonders bevorzugt 30 bis 45 Gew.-%, bezogen auf das Pfropfcopolymer B2, einer Pfropfhülle B2b, welche erhalten wird durch Emulsionspolymerisation in Gegenwart der mindestens einen Pfropfgrundlage B2a von:
      B2b1: 50 bis 95 Gew.-%, bevorzugt 65 bis 80 Gew.-%, besonders bevorzugt 75 bis 80 Gew.-%, bezogen auf die Pfropfhülle B2b, eines Monomers B2b1, ausgewählt aus Styrol oder Mischungen von Styrol und mindestens einem weiteren Monomer ausgewählt aus α-Methylstyrol, p-Methylstyrol und (Meth)acrylsäure-C₁-C₈-alkylester (z. B. Methylmethacrylat, Ethylmethacrylat, n-Butylacrylat, t-Butylacrylat);
      B2b2: 5 bis 50 Gew.-%, bevorzugt 20 bis 35 Gew.-%, besonders bevorzugt 20 bis 25 Gew.-%, bezogen auf die Pfropfhülle B2b, eines Monomers B2b2, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexymaleimid und N-Phenylmaleimid);
      wobei die Gesamtsumme aus Pfropfgrundlage B2a und Pfropfhülle B2b gerade 100 Gew.-% ergibt.

In einer bevorzugten Ausführungsform handelt es sich bei dem amorphen Styrol-Polymer B um ein Acrylnitril-Butadien-Styrol-Copolymer (ABS), beispielsweise vom Typ Terluran^{®} oder Novodur^{®} (INEOS Styrolution, Frankfurt).

In einer weiteren bevorzugten Ausführungsform handelt es sich bei dem amorphen Styrol-Polymer B um ein Styrol-Acrylnitril-Copolymer (SAN), insbesondere ein nicht kautschuk-modifiziertes Styrol-Acrylnitril-Copolymer, beispielsweise vom Typ Luran^{®} (INEOS Styrolution), und/oder ein α-Methylstyrol-Acrylnitril-Copolymer (AMSAN), beispielsweise vom Typ Luran^{®} High Heat (INEOS Styrolution).

SAN-Copolymere und AMSAN-Copolymere enthalten im Allgemeinen 18 bis 35 Gew.-%, bevorzugt 20 bis 32 Gew.-%, besonders bevorzugt 22 bis 30 Gew.-% Acrylnitril (AN), und 82 bis 65 Gew.-%, bevorzugt 80 bis 68 Gew.-%, besonders bevorzugt 78 bis 70 Gew.-% Styrol (S) bzw. α-Methylstyrol (AMS), wobei die Summe aus Styrol bzw. α-Methylstyrol und Acrylnitril 100 Gew.-% ergibt.

Die eingesetzten SAN und AMSAN-Copolymere weisen im Allgemeinen eine mittlere Molmasse M_{w} von 80.000 bis 350.000 g/mol, bevorzugt von 100.000 bis 300.000 g/mol und besonders bevorzugt von 120.000 bis 250.000 g/mol auf.

In einer bevorzugten Ausführungsform handelt es sich bei dem amorphen Styrol-Polymer B um mindestens ein SAN-Copolymer enthaltend (bevorzugt bestehend aus):
50 bis 95 Gew.-%, bevorzugt 65 bis 80 Gew.-%, besonders bevorzugt 69 bis 80 Gew.-%, insbesondere bevorzugt 71 bis 80 Gew.-%, bezogen auf das Polymer B, mindestens eines Monomers ausgewählt aus Styrol, α-Methylstyrol oder Mischungen von Styrol und α -Methylstyrol, und
5 bis 50 Gew.-%, bevorzugt 20 bis 35 Gew.-%, besonders bevorzugt 20 bis 31 Gew.-%, insbesondere bevorzugt 20 bis 29 Gew.-%, bezogen auf das Polymer B, eines Monomers ausgewählt aus Acrylnitril oder Mischungen von Acrylnitril und Methacrylnitril.

In einer weiteren bevorzugten Ausführungsform handelt es sich bei dem amorphen Styrol-Polymer B um ein transparentes Methylmethacrylat-Acrylnitril-Butadien-Styrol-Copolymer (MABS), insbesondere um mindestens ein Copolymer vom Typ Terlux^{®} (INEOS Styrolution) oder Toyolac^{®} (Toray).

### Komponente C

Als Komponente C enthält das erfindungsgemäße thermoplastische Polymerpulver P mindestens einen Verträglichkeitsvermittler, wobei es sich bei dem Verträglichkeitsvermittler um ein Copolymer handelt, ausgewählt aus der Gruppe bestehend aus Styrol-Butadien-Blockcopolymeren, Styrol-Polyolefin-Copolymeren, Styrol-Butadien-Polyolefin-Copolymeren, Acrylnitril-Styrol-Polyolefin-Copolymeren und Acrylnitril-Styrol-Butadien-Polyolefin-Copolymeren.

Bei der Polyolefin-Komponente der oben genannten Copolymere handelt es sich bevorzugt um Etyhlen, Propylen und Butylen oder Kombinationen hiervon. Die Styrol-Polyolefin-Copolymere sind bevorzugt ausgewählt aus Styrol-Ethylen-Propylen-Copolymeren, Styrol-Ethylen-Copolymeren, Styrol-Ethylen-Butylen-Copolymeren, Styrol-Propylen-Butylen-Copolymeren, Styrol-Butylen-Copolymeren und Styrol-Propylen-Copolymeren. Die Styrol-Butadien-Polyolefin-Copolymere sind bevorzugt ausgewählt aus Styrol-Butadien-Ethylen-Copolymeren, Styrol-Butadien-Ethylen-Propylen-Copolymeren, Styrol-Butadien-Butylen-Polymeren und Styrol-Butadien-Propylen-Polymeren. Die Acrylnitril-Styrol-Polyolefin-Copolymere sind bevorzugt ausgewählt aus Acrylnitril-Styrol-Ethylen-Copolymeren und Acrylnitril-Styrol-Propylen-Copolymeren.

In einer bevorzugten Ausführungsform handelt es sich bei dem Verträglichkeitsvermittler C um mindestens ein Copolymer ausgewählt aus Styrol-Butadien-Blockcopolymeren, Styrol-Ethylen-Propylen-Copolymeren, Styrol-Ethylen-Copolymeren, Styrol-Ethylen-Butylen-Copolymeren, Styrol-Propylen-Butylen-Copolymeren, Styrol-Butylen-Copolymeren, Acrylnitril-Styrol-Ethylen-Copolymeren und Acrylnitril-Styrol-Propylen-Copolymeren. Insbesondere bevorzugt handelt es bei dem Verträglichkeitsvermittler C um mindestens ein Copolymer ausgewählt aus sternförmigen Styrol-Butadien-Blockcopolymeren, linearen Styrol-Butadien-Blockcopolymeren, Styrol-Ethylen-Propylen-Blockcopolymeren, Styrol-Ethylen-Butylen-Blockcopolymeren, Acrylnitril-Styrol-Ethylen-Copolymeren und Acrylnitril-Styrol-Propylen-Copolymeren.

Typischerweise handelt es sich bei einem Verträglichkeitsvermittler um ein Polymer, welches in der Lage ist, zwei oder mehrere teilweise oder vollständig unverträgliche Polymere miteinander verträglich zu machen, wobei bei einer definierten Schmelzetemperatur die Domänengröße der verträglich gemachten Polymerkomponenten kleiner ist als ohne Verträglichkeitsvermittler. Diese Verträglichkeitsvermittler tragen insbesondere zur Verbesserung der mechanischen Eigenschaften, wie Zugfestigkeit und Schlagzähigkeit, bei.

Die Menge des Verträglichkeitsvermittlers C in den erfindungsgemäßen Polymerblends liegt im Bereich von 0,1 bis 20 Gew.-%, vorzugsweise von 1 bis 15 Gew.-%. Insbesondere bevorzugt ist der Verträglichkeitsvermittler C von 1 bis 12 Gew.-%, oftmals zwischen 5 und 10 Gew.-%, im Polymerpulver enthalten.

Die als Verträglichkeitsvermittler C verwendeten Copolymere sind oftmals kommerziell erhältlich, beispielsweise von INEOS Styrolution GmbH, von Kuraray Europe, von Kraton Polymers oder von NOF Corporation.

In einer bevorzugten Ausführungsform umfasst der Verträglichkeitsvermittler C mindestens ein Styrol-Butadien-Blockcopolymer. Bevorzugt handelt es sich bei dem Verträglichkeitsvermittler C um mindestens ein Styrol-Butadien-Blockcopolymer enthaltend (bevorzugt bestehend aus) 40 bis 80 Gew.-%, bevorzugt 50 bis 80 Gew.-%, bezogen auf das gesamte Styrol-Butadien-Blockcopolymer, Styrol, und 20 bis 60 Gew.-%, bevorzugt 20 bis 50 Gew.-%, bezogen auf das gesamte Styrol-Butadien-Blockcopolymer, Butadien.

Geeignete Styrol-Butadien-Blockcopolymer sind beispielsweise in WO2016/034609, WO2015/121216 und WO2015/004043 beschrieben. Verfahren zur Herstellung von linearen und sternförmig verzweigten Styrol-Butadien-Blockcopolymeren sind dem Fachmann bekannt und beispielsweise in den oben genannten Dokumenten beschrieben.

Als Verträglichkeitsvermittler C können lineare und/oder sternförmig verzweigte Styrol-Butadien-Blockcopolymere eingesetzt werden. Beispielsweise können lineare Styrol-Butadien-Blockcopolymere vom Typ Styroflex^{®} (z.B. Styroflex^{®} 2G 66, INEOS Styrolution) und/oder sternförmig verzweigte Styrol-Butadien-Blockcopolymere vom Typ Styrolux^{®} (z.B. Styrolux^{®} 3G 55, Styrolux^{®} 693 D, Styrolux^{®} 684 D, INEOS Styrolution) eingesetzt werden.

Bevorzugt umfasst der Verträglichkeitsvermittler C mindestens ein Styrol-Butadien-Blockcopolymer, welches mindestens einen harten Styrol-Homoblock S und mindestens einen weichen Block bestehend aus 40 bis 100 Gew.-% Butadien und 0 bis 60 Gew.-% Styrol umfasst. Bevorzugt umfasst das Styrol-Butadien-Blockcopolymer mindestens einen harten Styrol-Homoblock S und mindestens einen weichen gemischten Block S/B bestehend aus 20 bis 60 Gew.-% Styrol und 40 bis 80 Gew.-% Butadien. Beispielsweise kann das Styrol-Butadien-Blockcopolymer mindestens eine Sequenz S1-S/B-S2 aufweisen.

Das Styrol-Monomer des Styrol-Butadien-Blockcopolymers kann teilweise oder ganz durch andere vinylaromatische Monomere ersetzt sein, wie:
α (alpha)-Methylstyrol, 2-Methylstyrol, 3-Methylstyrol, 4-Methylstyrol, 2-Ethylstyrol, 3-Ethylstyrol, 4-Ethylstyrol, 4-n-Propyl-Styrol, 4-t-Butylstyrol, 2,4- Dimethylstyrol, 4-Cyclohexylstyrol, 4-Decylstyrol, 2-Ethyl-4-Benzylstyrol, 1,1-Diphenylethylen, 4-(4-Phenyl-n-butyl)styrol, 1-Vinylnaphthalen und 2-Vinylnaphthalen, bevorzugt α-Methylstyrol, Methylstyrol und 1,1-Diphenylethylen.

Bevorzugt handelt es sich bei dem Butadien um 1,3-Butadien. Das Butadien-Monomer des Styrol-Butadien-Blockcopolymers kann teilweise oder ganz durch andere konjugierte Dien-Monomere, bevorzugt mit 4 bis 12 Kohlenstoffatomen, besonders bevorzugt mit 4 bis 8 Kohlenstoffatomen, ersetzt sein, wie beispielsweise 2-Methyl-1,3-butadien (Isopren), 2-Ethyl-1,3-butadien, 2,3-Dimethyl-1,3-butadien, 1,3-Pentadien, 3-Butyl-1,3-octadien und Mischungen hieraus, bevorzugt 2-Methyl-1,3-butadien (Isopren).

In einer besonders bevorzugten Ausführungsform handelt es sich bei dem Verträglichkeitsvermittler C um ein Styrol-Butadien-Blockcopolymer oder die Kombination eines Styrol-Butadien-Blockcopolymers und eines weiteren Polymers ausgewählt aus Styrol-Polyolefin-Copolymeren, Acrylnitril-Styrol-Polyolefin-Copolymeren und Acrylnitril-Styrol-Butadien-Polyolefin-Copolymeren, bevorzugt ausgewählt aus Styrol-Ethylen-Propylen-Copolymeren, Styrol-Ethylen-Copolymeren, Styrol-Ethylen-Butylen-Copolymeren, Styrol-Propylen-Butylen-Copolymeren, Styrol-Butylen-Copolymeren, Acrylnitril-Styrol-Ethylen-Copolymeren und Acrylnitril-Styrol-Propylen-Copolymeren. Bevorzugt handelt es sich um die Kombination eines Styrol-Butadien-Blockcopolymers und eines weiteren Polymers ausgewählt aus Styrol-Ethylen-Propylen-Blockcopolymeren.

### Komponente D

Das erfindungsgemäße thermoplastische Polymerpulver P kann optional mindestens ein Additiv und/oder einen Hilfsstoff als weitere Komponente D enthalten. Die Komponente D ist von 0 bis 5 Gew.-%, oftmals von 0 bis 3 Gew.-%, häufig von 0,1 bis 3 Gew.-% in dem Polymerpulver enthalten.

Bei der optionalen Komponente D handelt es sich bevorzugt um mindestens ein Additiv und/oder einen Hilfsstoff ausgewählt aus Antioxidantien, UV-Stabilisatoren, Stabilisatoren gegen Wärmezersetzung, Peroxidzerstörern, Antistatika, Gleitmitteln, Rieselhilfsmitteln, Entformungsmitteln, Keimbildungsmitteln, Weichmachern, faser- oder pulverförmigen Füll- und Verstärkungsmitteln und Färbemitteln, wie Farbstoffen und Pigmenten.

Als Additive oder Hilfsstoffe kommen die dem Fachmann bekannten und im Stand der Technik (z.B. Plastics Additives Handbook, Herausgeber Schiller et al., 6. Auflage 2009, Hanser) beschriebenen Polymeradditive in Frage. Die Zugabe des Additives und/oder Hilfsstoffs kann sowohl während des Compoundierens (Vermischen der polymeren Komponenten A, B und C in der Schmelze) als auch vor oder nach dem mechanischen Zerkleinern des Polymers erfolgen.

Bevorzugt ist die optionale Komponente D ausgewählt aus der Gruppe bestehend aus Antioxidantien, UV-Stabilisatoren, Stabilisatoren gegen Wärmezersetzung, Peroxidzerstörern, Antistatika, Gleitmitteln, Rieselhilfsmitteln, Entformungsmitteln, Keimbildungsmitteln, Weichmachern, faser- oder pulverförmigen Füll- und Verstärkungsmitteln (Glasfasern, Kohlefasern, etc.) und Färbemitteln, wie Farbstoffen und Pigmenten.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid). Zur besseren Verarbeitung können in Mengen bis zu 0,1 Gew.-% Antiblockmittel auf mineralischer Basis den Polymerpulvern P zugesetzt werden. Als Beispiele seien amorphe oder kristalline Kieselsäure, Calciumcarbonat oder Aluminiumsilikat genannt.

Als Additive zur Verbesserung der Fließ- und Rieselfähigkeit des Polymerpulvers sind Siliciumdioxid-Nanopartikel-Pulver (z.B. Aerosil^{®} von Evonik) oder Siliconadditive (z.B. Genioplast^{®} von Wacker) besonders gut geeignet. In einer bevorzugten Ausführungsform enthält das thermoplastische Polymerpulver P 0,01 bis 5 Gew.-%, bevorzugt 0,1 bis 3 Gew.-% mindestens eines Siliciumdioxid-Nanopartikel-Pulvers oder Siliconadditivs als Additiv D.

Als Verarbeitungshilfsmittel kann beispielsweise Mineralöl, vorzugsweise medizinisches Weißöl, in Mengen bis zu 5 Gew.-%, vorzugsweise bis zu 2 Gew.-% eingesetzt werden.

Beispiele für geeignete Füll- und Verstärkungsmittel sind Kohlenstofffasern, Glasfasern, amorphe Kieselsäure, Calciumsilicat (Wollastonit), Aluminiumsilicat, Magnesiumcarbonat, Calciumcarbonat, Bariumsulfat, Kaolin, Kreide, gepulverter Quarz, Glimmer und Feldspat.

Typischerweise enthält das thermoplastische Polymerpulver P Additive und/oder Hilfsstoffe in einer Menge im Bereich von 0 bis 5 Gew.-%, bevorzugt 0 bis 3 Gew.-%, insbesondere 0,1 bis 5 Gew.-%, bevorzugt 0,1 bis 5 Gew.-%, weiterhin bevorzugt 0,5 bis 3 Gew.-%, bezogen auf das gesamte Polymerpulver P. Die Obergrenzen der Komponenten A und/oder B im Polymerpulver P können bei Anwesenheit der optionalen Komponente D entsprechend angepasst werden (z.B. 10 bis 84,9 Gew.-% bzw. 10 bis 86,9 Gew.-% A oder B, bezogen auf das Polymerpulver P).

Die optionale Komponente D kann während des Mischens der polymeren Komponenten A, B und C (Compoundieren), nach dem Compoundieren, während des mechanischen Zerkleinerns oder nach dem mechanischen Zerkleinern des Polymers zugegeben werden.

### Thermoplastisches Polymerpulver P

Für das Selektive Lasersintern ist es vorteilhaft, ein Polymerpulver mit einer kontrollierten Partikelgröße zu verwenden. Das erfindungsgemäße thermoplastische Polymerpulver P weist einen mittleren Partikeldurchmesser D₅₀ im Bereich von 5 bis 200 µm, bevorzugt 5 bis 150 µm, insbesondere bevorzugt von 20 bis 100 µm auf. Auch bevorzugt ist ein Bereich von 30 bis 80 µm, weiterhin bevorzugt von 40 bis 70 µm. Partikelgrößen und Partikelgrößenverteilungen können mit Hilfe der bekannten Verfahren bestimmt werden, z.B. Siebanalyse, Lichtstreumessung, Ultrazentrifuge (z.B. beschrieben in W. Scholtan, H. Lange: Kolloid Z. u. Z. Polymere 250, S. 782-796, 1972).

Der mittlere Partikeldurchmesser D₅₀ ist der Durchmesser, der die Summenverteilung der Teilchenvolumina in zwei gleichgroße Teile aufteilt, d.h. 50% der Partikel sind größer und 50% sind kleiner als der Durchmesser D₅₀. Bei konstanter Dichte entspricht der Volumenanteil auch dem Masseanteil. Der Wert D₉₀ gibt die Partikelgröße an, bei der 90% der Partikel bezogen auf das Volumen bzw. die Masse kleiner als der angegebene Wert sind. Der Wert D₁₀ gibt die Partikelgröße an, bei der 10% der Partikel bezogen auf das Volumen bzw. die Masse kleiner als der angegebene Wert sind.

In einer bevorzugten Ausführungsform weist das erfindungsgemäße thermoplastische Polymerpulver P einen Partikeldurchmesser D₉₀ (bevorzugt bezogen auf den Volumenanteil) von weniger als 200 µm, bevorzugt von weniger als 180 µm, auf. In einer bevorzugten Ausführungsform weist das erfindungsgemäße thermoplastische Polymerpulver P einen Gewichtsanteil kleiner 1 % an Partikeln auf, deren Durchmesser größer ist als 200 µm, bevorzugt größer als 180 µm, ist. In einer bevorzugten Ausführungsform weist das erfindungsgemäße thermoplastische Polymerpulver P einen Gewichtsanteil größer als 80 %, bevorzugt größer 90 % an Partikeln auf, deren Durchmesser kleiner als 100 µm ist.

In einer weiteren bevorzugten Ausführungsform weist das erfindungsgemäße thermoplastische Polymerpulver P eine multimodale Partikelgrößenverteilung auf. Eine multimodale Partikelgrößenverteilung ist typischerweise eine Partikelgrößenverteilung, die mehr als ein Maximum aufweist. Die Partikelgrößenverteilung kann bevorzugt zwei, drei oder mehr Maxima besitzen. In einer bevorzugten Ausführungsform weist das erfindungsgemäße thermoplastische Polymerpulver P eine bimodale Partikelgrößenverteilung (d.h. eine Partikelgrößenverteilung mit zwei Maxima) auf. Bevorzugt liegt ein Partikelgrößenmaximum bei einem Wert im Bereich von 20 bis 100 µm, bevorzugt im Bereich von 30 bis 80 µm, und ein weiteres Partikelgrößenmaximum liegt bei einem Wert im Bereich von 0,5 bis 30 µm, bevorzugt im Bereich von 1 bis 20 µm.

In einer bevorzugten Ausführungsform betrifft die Erfindung ein thermoplastisches Polymerpulver P wie oben beschrieben enthaltend
(A) 20 bis 79,9 Gew.-%, bevorzugt 30 bis 66 Gew.-%, insbesondere bevorzugt 35 bis 60 Gew.-%, bezogen auf das gesamte Polymerpulver P, mindestens eines Polyolefins, ausgewählt aus Polyethylen (PE), Polypropylen (PP) und Polypropylen-Polyethylen-Copolymeren, als teilkristallines Polyolefin A;
(B) 20 bis 79,9 Gew.-%, bevorzugt 30 bis 66 Gew.-%, insbesondere bevorzugt 35 bis 60 Gew.-%, bezogen auf das gesamte Polymerpulver P, mindestens eines Polymers ausgewählt aus der Gruppe bestehend aus Styrol-Acrylnitril-Copolymeren (SAN), Acrylnitril-Butadien-Styrol-Copolymeren (ABS), Acrylat-Styrol-Acrylnitril-Copolymeren (ASA), Methylmethacrylat-Acrylnitril-Butadien-Styrol-Copolymeren (MABS), Methylmethacrylat-Butadien-Styrol-Copolymeren (MBS), α(alpha)-Methylstyrol-Acrylnitril-Copolymeren (AMSAN), Styrol-Methylmethacrylat-Copolymeren (SMMA), amorphem Polystyrol (PS), schlagzäh-modifiziertem Polystyrol (HIPS) als amorphes Styrol-Polymer B;
(C) 0,1 bis 20 Gew.-%, bevorzugt 1 bis 15 Gew.-%, besonders bevorzugt 5 bis 10 Gew.-%, bezogen auf das gesamte Polymerpulver P, eines Copolymers ausgewählt aus der Gruppe bestehend aus Styrol-Butadien-Blockcopolymeren, Styrol-Polyolefin-Copolymeren, Acrylnitril-Styrol-Polyolefin-Copolymeren und Acrylnitril-Styrol-Butadien-Polyolefin-Copolymeren, bevorzugt ausgewählt aus der Gruppe bestehend aus sternförmigen Styrol-Butadien-Blockcopolymeren, linearen Styrol-Butadien-Blockcopolymeren, Styrol-Ethylen-Propylen-Blockcopolymeren, Styrol-Ethylen-Butylen-Blockcopolymeren, Acrylnitril-Styrol-Ethylen-Copolymeren und Acrylnitril-Styrol-Propylen-Copolymeren, als Verträglichkeitsvermittler C;
(D1) optional 0 bis 5 Gew.-%, bevorzugt 0 bis 3 Gew.-%, bevorzugt 0,01 bis 5 Gew.-%, besonders bevorzugt 0,1 bis 3 Gew.-% mindestens eines Siliciumdioxid-Nanopartikel-Pulvers oder Siliconadditives als Rieselhilfsmittel und
(D2) optional 0 bis 5 Gew.-%, bevorzugt 0 bis 3 Gew.-%, bezogen auf das gesamte Polymerpulver P, mindestens eines weiteren Additives und/oder Hilfsstoffes, bevorzugt mindestens ein Antistatikum, als weitere Komponente D.

### Verfahren zur Herstellung des thermoplastischen Polymerpulvers P

Die vorliegende Erfindung betrifft zudem ein Verfahren zur Herstellung des erfindungsgemäßen thermoplastischen Polymerpulvers P umfassend die folgenden Schritte:
i) Bereitstellen einer festen Mischung enthaltend (bevorzugt bestehend aus) die Komponenten A, B, C und optional D, bevorzugt erhalten durch Vermischen der Komponenten A, B und C (optional D) in der Schmelze, beispielsweise in einem Extruder, und Abkühlen der Schmelze;
ii) mechanisches Zerkleinern der festen Mischungen, insbesondere mittels Mahlen, Mikronisieren, Gefriermahlen (Kryomahlen) oder Jet-Mahlen;
wobei ein thermoplastisches Polymerpulver P erhalten wird, das einen mittleren Partikeldurchmesser D₅₀ im Bereich von 5 bis 200 µm, bevorzugt 5 bis 150 µm, insbesondere bevorzugt 20 bis 100 µm, besonders bevorzugt von 30 bis 80 µm aufweist.

Bevorzugt umfasst Schritt i) das Vermischen (Compoundieren) der Komponenten A, B und C im flüssigen Zustand, bevorzugt in der Schmelze, insbesondere bei einer Temperatur im Bereich von 200 bis 250 °C. Das Vermischen der Komponenten A, B und C sowie optional D wird typischerweise in einem geeigneten Extruder, beispielsweise einem Doppelschneckenextruder, durchgeführt. Grundsätzlich ist auch der Einsatz anderer bekannter Mischungsvorrichtungen, wie Brabender-Mühlen oder Banbury-Mühlen, möglich. Der Fachmann wählt die Compoundierungs-Bedingungen, wie z.B. die Compoundierungs-Temperatur, in Abhängigkeit der verwendeten Komponenten, insbesondere der polymeren Komponenten A und B. Eine möglichst intensive Durchmischung der Komponenten A, B und C sowie optional D ist dabei vorteilhaft.

Bevorzugt umfasst Schritt i) das Abkühlen und Pelletieren der Polymer-Mischung.

Bevorzugt erfolgt das mechanische Zerkleinern der festen Mischungen in Schritt ii) mittels Mahlen, Mikronisieren, Gefriermahlen (Kryomahlen) oder Jet-Mahlen. Geeignete Verfahren zum mechanischen Zerkleinern, insbesondere durch Mahlen, sind beispielsweise in Schmid, M., Selektives Lasersintern (SLS) mit Kunststoffen, S. 105-113 (Carl Hanser Verlag München 2015) beschrieben.

Thermoplastische Polymere lassen sich oftmals bei Zimmertemperatur nur schlecht zu sehr kleinen Partikelgrößen zerkleinern, da sie durch Erwärmung beim Mahlen zum Erweichen und Verklumpen neigen. Durch Kühlen während des Mahlvorgangs, etwa mittels Trockeneis, flüssigem CO₂ oder flüssigem Stickstoff, ist es möglich, auch thermoplastische Polymere zu sehr kleinen Partikelgrößen zu vermahlen, da sie dann eine ausreichende Sprödigkeit aufweisen. Das Verfahren des Gefriermahlens (Kryomahlen) zeichnet sich durch eine Kombination aus sehr niedrigen Temperaturen und eines mechanischen Mahlprozesses aus. Das Verfahren ist beispielsweise beschrieben in Liang, S. B. et al. (Production of Fine Polymer Powders under Cryogenic Conditions, Chem. Eng. Technol. 25 (2002), S. 401 bis 405).

### Verfahren des Selektiven Lasersinterns (SLS)

Die vorliegende Erfindung betrifft zudem ein Verfahren zur Herstellung eines dreidimensionalen Bauteils mittels des Selektiven Lasersinterns umfassend die Schritte:
x) Einstellen einer Verarbeitungstemperatur Tₓ in einem Bauraum und Bereitstellen einer Pulverschicht, bestehend aus dem erfindungsgemäßen thermoplastischen Polymerpulver P, im Bauraum;
xi) ortsaufgelöstes Aufschmelzen mittels eines gerichteten Strahls elektromagnetischer Strahlung, bevorzugt mittels eines Laserstrahls, mittels Infrarot-Strahlung oder mittels UV-Strahlung, und anschließendes Erstarren des thermoplastischen Polymerpulvers P in einem definierten Bereich;
wobei die Schritte x) und xi) mehrmals durchgeführt werden, so dass durch Verbinden der Bereiche des aufgeschmolzenen und wieder erstarrten Polymers schichtweise ein dreidimensionales Bauteil erhalten wird.

Bevorzugt weist die Pulverschicht eine Dicke im Bereich von 10 bis 400 µm, bevorzugt von 50 bis 300 µm, besonders bevorzugt von 100 bis 200 µm auf. Das Bereitstellen der Pulverschicht kann mit Hilfe eines Rakels, einer Rolle oder einer anderen geeigneten Vorrichtung erfolgen. Oftmals wird nach dem Bereitstellen der Pulverschicht das überschüssige Polymerpulver mit einem Rakel oder einer Rolle abgetragen.

Typischerweise wird nach dem einmaligen Durchlaufen der Schritte x) und xi) der Bauraum abgesenkt und mit einer neuen Pulverschicht bestehend aus Polymerpulver P versehen. Typischerweise entsteht durch das schichtweise Schmelzen und Verfestigen der Pulverpartikel (Sintern) das Bauteil als Verbindung der einzelnen Schichten.

Geeignete Vorrichtungen zum Selektiven Lasersintern und für verwandte Verfahren der additiven Fertigung sind beispielsweise Formiga P110, EOS P396, EOSINT P760 und EOSINT P800 (Hersteller EOS GmbH), 251P und 402p (Hersteller Hunan Farsoon High-tech Co.,Ltd), DTM Sinterstation 2000, ProX SLS 500, sPro 140, sPro 230 und sPro 60 (Hersteller 3D Systems Corporation) und Jet Fusion 3D (Hersteller Hewlett Packard Inc.). Im Falle der Vorrichtung Jet Fusion 3D (Hersteller Hewlett Packard Inc.) erfolgt das ortsaufgelöste Aufschmelzen mit Hilfe von Infrarot-Strahlung.

Das erfindungsgemäße Verfahren umfasst in Schritt x), dass die Temperatur im Bauraum auf die Verarbeitungstemperatur Tₓ eingestellt wird. Die Verarbeitungstemperatur Tₓ für das Verfahren des SLS bezeichnet typischerweise die Temperatur, welche zu Beginn des Verfahrens (vor dem ersten Schritt xi) im Bauraum eingestellt wird. Typischerweise wird die Verarbeitungstemperatur so gewählt, dass der Bauraum auf eine Temperatur bis kurz unterhalb der Schmelztemperatur des Polymerpulvers aufgeheizt ist, um nur noch einen kleinen Teil der zum Aufschmelzen nötigen Energie mit dem Laserstrahl selbst einbringen zu müssen. Bevorzugt wird die Verarbeitungstemperatur Tₓfür das Verfahren des SLS im Temperaturbereich zwischen Kristallisationstemperatur und Schmelztemperatur gewählt. Bevorzugt liegt die Verarbeitungstemperatur Tₓ des erfindungsgemäßen Verfahrens im Bereich von 80 bis 250 °C, bevorzugt 80 bis 200 °C, bevorzugt von 90 bis 180 °C, besonders bevorzugt von 120 bis 175 °C, weiterhin bevorzugt von 130 bis 170 °C.

Im Sinne der vorliegenden Erfindung bezeichnet das Verarbeitungsfenster einen Temperaturbereich, welcher dem Abstand zwischen Kristallisationstemperatur und Schmelztemperatur für ein gegebenes Polymerpulver P entspricht. Das Verarbeitungsfenster kann zum einen als Temperaturbereich in K (Kelvin) angegeben werden oder durch die absolute Lage des Temperaturbereichs in °C (Grad Celsius).

In einer bevorzugten Ausführungsform beträgt das Verarbeitungsfenster des Polymerpulvers P beim erfindungsgemäßen Verfahren des Selektiven Lasersinterns von 10 bis 110 K (Kelvin), bevorzugt 10 bis 80 K, insbesondere bevorzugt 20 bis 70 K. In einer bevorzugten Ausführungsform liegt das Verarbeitungsfenster des Polymerpulvers P beim erfindungsgemäßen Verfahren des Selektiven Lasersinterns im Bereich von 80 bis 250 °C, bevorzugt von 80 bis 200 °C, bevorzugt von 90 bis 180 °C, weiterhin bevorzugt 120 bis 175 °C, insbesondere bevorzugt von 130 bis 170 °C, weiterhin bevorzugt von 80 bis 120 °C. Das Verarbeitungsfenster für ein gegebenes Polymerpulver beschreibt typischerweise einen Temperaturbereich, in welchem die Temperatur während des Verfahren des SLS um die eingestellte Verarbeitungstemperatur Tₓ schwanken kann, wobei ein stabiles SLS-Verfahren gewährleistet ist.

Bevorzugt verändert sich die Temperatur im Bauraum während der Durchführung der einzelnen Schritte x) und xi) des erfindungsgemäßen Verfahrens um höchstens +/- 10 %, bevorzugt um höchstens +/- 5 %, ausgehend von der eingestellten Verarbeitungstemperatur Tₓ. In einer bevorzugten Ausführungsform liegt die Verarbeitungstemperatur Tₓ beim erfindungsgemäßen Verfahren mittels des Selektiven Lasersinterns im Bereich von 80 bis 250 °C, bevorzugt 80 bis 200 °C, bevorzugt von 90 bis 180 °C, besonders bevorzugt von 120 bis 175 °C, wobei sich die Temperatur während der Durchführung der einzelnen Schritte x) und xi) um höchstens +/- 10 %, bevorzugt um höchstens +/- 5 %, ausgehend von der eingestellten Verarbeitungstemperatur Tₓ verändert.

Es wurde zudem überraschend gefunden, dass sich die thermischen Eigenschaften (ermittelt durch DSC-Messungen) und damit die geeigneten Verarbeitungstemperaturen der erfindungsgemäßen Polymerpulver P nur gering von den thermischen Eigenschaften und Verarbeitungstemperaturen der Polymerpulver unterscheiden, welche keinen Blend darstellen und das entsprechende teilkristalline Polyolefin A als einzige polymere Komponente enthalten. Eine bevorzugte Ausführungsform betrifft somit ein Verfahren zur Herstellung eines dreidimensionalen Bauteils mittels des Selektiven Lasersinterns wie beschrieben, wobei sich die eingestellte Verarbeitungstemperatur Tₓ für das erfindungsgemäße Polymerpulver um höchstens +/- 20 K, bevorzugt um höchstens +/- 10 K, besonders bevorzugt um höchstens +/- 5 K, unterscheidet von der Verarbeitungstemperatur T_{x (A)} eines Polymerpulvers, welches das entsprechende teilkristalline Polyolefin A als einzige polymere Komponente enthält. Bevorzugt gilt dies entsprechend für die Temperatur im Bauraum während der Durchführung der einzelnen Schritte x) und xi).

In einer bevorzugten Ausführungsform ist der Volumenschwund und/oder der Verzug bei der Herstellung des dreidimensionalen Bauteils mittels des Selektiven Lasersinterns unter Verwendung des erfindungsgemäßen Polymerpulvers P um mindestens 10 % verringert im Vergleich zum Volumenschwund oder Verzug bei Verwendung eines Polymerpulvers umfassend das entsprechende teilkristalline Polyolefin A als einzige polymere Komponente.

Unter Volumenschwund wird in Sinne der vorliegenden Erfindung die Abnahme des Volumens eines Bauteils beim Abkühlen von der Verarbeitungstemperatur (Prozesstemperatur) auf Zimmertemperatur (beispielsweise 20 °C) verstanden. Bei kubischen Bauteilen setzt sich der Volumenschwund typischerweise aus dem Schwund in x-, y- und z-Richtung zusammen.

Unter Verzug wird im Sinne der vorliegenden Erfindung die Änderung der Form eines Bauteils beim Abkühlen von der Verarbeitungstemperatur (Prozesstemperatur) auf Zimmertemperatur (beispielsweise 20 °C) verstanden. Beispielsweise kann der Verzug durch Messung der geometrischen Abweichung einer Bauteilkante zur geraden Linie der gewünschten Form bestimmt werden. Üblicherweise wird der Verzug an Standard-Formkörpern, beispielsweise Stäben oder Würfeln, bestimmt.

In einer bevorzugten Ausführungsform wird bei der Herstellung des dreidimensionalen Bauteils mittels des Selektiven Lasersinterns unter Verwendung des erfindungsgemäßen Polymerpulvers P ein Bauteil mit einer geringeren Porosität erhalten im Vergleich zu einem Bauteil, welches unter Verwendung eines Polymerpulvers umfassend das entsprechende amorphe Polymer B als einzige polymere Komponente erhalten wird. Bevorzugt ist die Porosität um mindestens 10 % geringer.

Unter Porosität des Bauteils wird im Sinne der vorliegenden Erfindung das Verhältnis von Hohlraumvolumen des Bauteils zu Gesamtvolumen des Bauteils verstanden. Oftmals kann die Porosität zudem durch visuelle Beurteilung bestimmt werden.

### Verwendung des thermoplastischen Polymerpulvers P

Die vorliegende Erfindung betrifft zudem eine Verwendung des erfindungsgemäßen thermoplastischen Polymerpulvers P zur Herstellung eines dreidimensionalen Bauteils mittels des Selektiven Lasersinterns (SLS) oder verwandter Verfahren der additiven Fertigung.

Die im Zusammenhang mit dem erfindungsgemäßen Polymerpulver P beschriebenen Ausführungsformen, z.B. hinsichtlich der Komponenten A, B, C und D gelten in entsprechender Weise für die erfindungsgemäßen Verfahren und die erfindungsgemäße Verwendung.

Die erhaltenen Bauteile können in vielfältiger Weise eingesetzt werden, beispielsweise als Bestandteil von Fahr- und Flugzeugen, Schiffen, Verpackungen, Sanitärartikeln, Medizinprodukten, Eingabegeräten und Bedienelementen, Laborgeräten- und Verbrauchsgütern, Maschinenteilen, Haushaltsgeräten, Mobiliar, Griffen, Dichtungen, Bodenbelägen, Textilien, Agrargeräten, Schuhsohlen, Gefäßen zur Aufbewahrung von Nahrungs- und Futtermitteln, Geschirr, Besteck, Filtern, Fernsprechgeräten oder als Prototyp oder Modell in Industrie, Design und Architektur.

### Erklärung der Zeichnungen

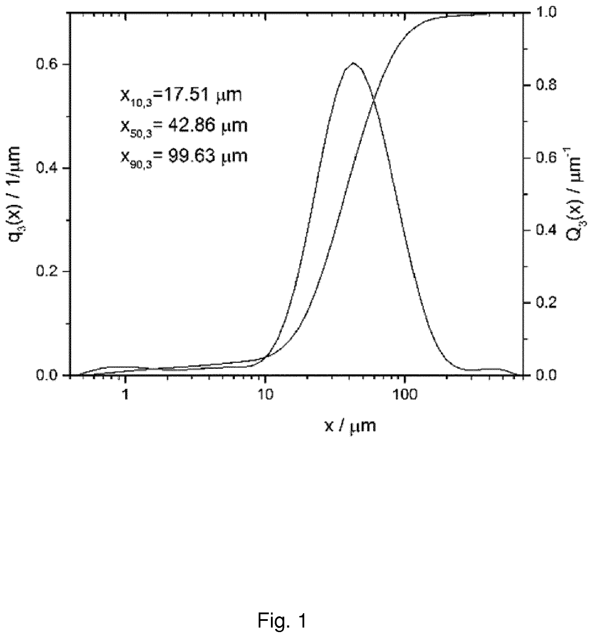

Fig. 1 zeigt eine exemplarische Darstellung der Partikelgrößenverteilung eines erfindungsgemäßen Pulvers. Es ist die Partikelgrößenverteilungsdichte q₃(x) bzw. die Partikelgrößenverteilungssumme Q₃(x) in Abhängigkeit der Partikelgröße x in µm (Mikrometer) gezeigt. Die Werte D₁₀ (x_{10,3}), D₅₀ (x_{50,3}) und D₉₀ (x_{90,3}) sind angegeben.

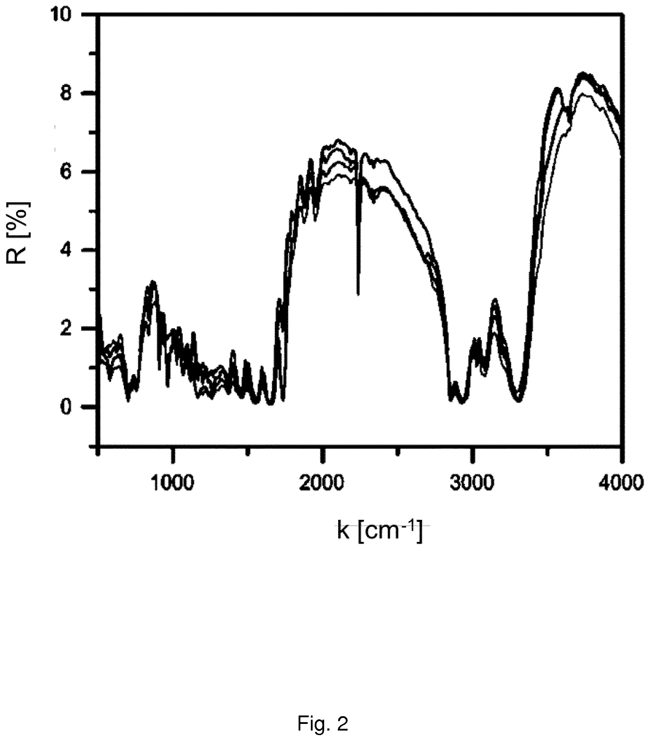

Fig. 2 zeigt eine exemplarische Darstellung der diffusen Reflexion R (in %) in Abhängigkeit der Wellenzahl k (in cm⁻¹) für einige der erfindungsgemäßen Pulver.

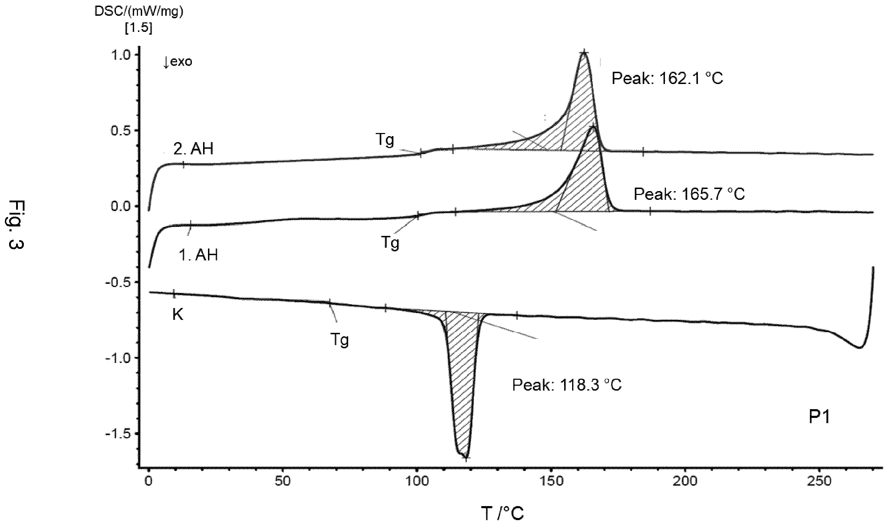

Fig. 3 zeigt die DSC-Kurven des erfindungsgemäßen Pulvers P1 mit erstem Aufheizvorgang (1. AH), Abkühlung (K) und zweitem Aufheizvorgang (2. AH). Es ist die zugeführte bzw. abgeführte Wärmemenge (in mW/mg Probe) in Abhängigkeit der Temperatur T (in °C) aufgetragen. Für die Kühlung (K) ergibt sich: Peak (Kristallisation) 118,3 °C; Onset 110,5 °C; Ende 122,9 °C; Fläche -52,91 J/g; Glasübergang T_{g} 67,5 °C. Für den ersten Aufheizvorgang (1. AH) ergibt sich: Peak (Schmelzen) 165,7 °C; Onset 151,7 °C; Ende 171,1 °C; Fläche 47,75 J/g; Glasübergang T_{g} 100,6 °C. Für den zweiten Aufheizvorgang (2. AH) ergibt sich: Peak (Schmelzen) 162,1 °C; Onset 153,6 °C; Ende 168,4 °C; Fläche 50,63 J/g; Glasübergang T_{g} 101,5 °C.

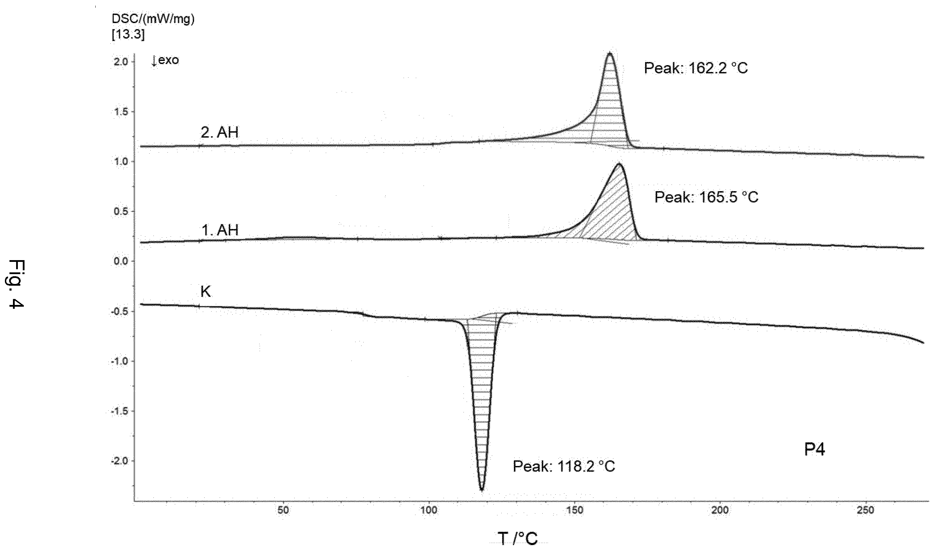

Fig. 4 zeigt die DSC-Kurven des erfindungsgemäßen Pulvers P4 mit erstem Aufheizvorgang (1.AH), Abkühlung (K) und zweitem Aufheizvorgang (2.AH). Es ist die zugeführte bzw. abgeführte Wärmemenge (in mW/mg Probe) in Abhängigkeit der Temperatur T (in °C) aufgetragen. Für die Kühlung K ergibt sich: Peak (Kristallisation) 118,2 °C; Onset 113,3 °C; Ende 123,0 °C. Für den ersten Aufheizvorgang (1. AH) ergibt sich: Peak (Schmelzen) 165,5 °C; Onset 151,6 °C; Ende 171,3 °C. Für den zweiten Aufheizvorgang (2. AH) ergibt sich: Peak (Schmelzen) 162,2 °C; Onset 155,5 °C; Ende: 168,5 °C.

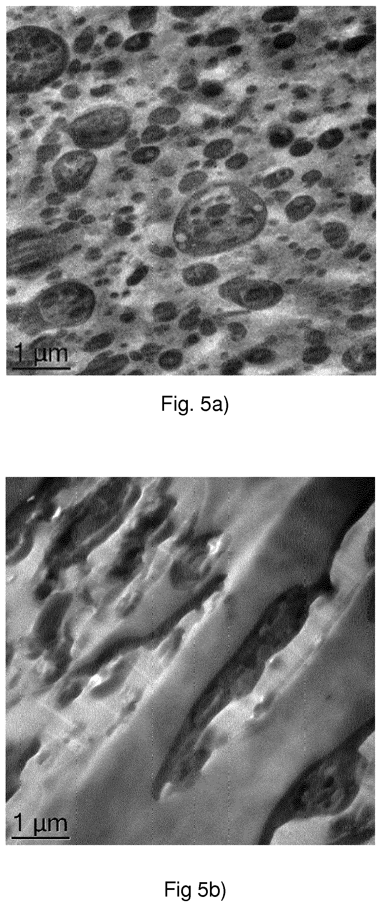

Fig. 5 zeigt transmissionselektronenspektroskopische Aufnahmen von Prüfkörpern, welche aus den erfindungsgemäßen Blends hergestellt wurden: 5a) beispielhafter Polymerblend (Beispiel P1) mit guter Compatibilisierung, 5b) Vergleichsaufnahme eines uncompatibilisierten Polymerblends (Vergleichsbeispiel V1).

Die Erfindung wird durch die folgenden Beispiele und Ansprüche weiter erläutert.

### Beispiele

### 1.1 Verwendete Komponenten

Als Komponente A wurden die folgenden teilkristallinen Polyolefine A1 und A2 eingesetzt:
A1 isotaktisches PP (100-HR25, INEOS Olefins & Polymers)
A2 LD-PE (18R430, INEOS Olefins & Polymers)

Als Komponente B1 wurde ein hoch schlagzähes Acrylnitril-Butadien-Styrolpolymer (ABS) vom Typ Terluran^{®} (INEOS Styrolution, Frankfurt) mit einer Schmelz-Volumenfließrate (Melt Volume Rate, MVR 220 °C/10 kg Belastung, ISO 1133) von etwa 6 cm³/10 min eingesetzt.

Als Komponente B2 wurde ein schlagzähes amorphes Polystyrol (HIPS) (INEOS Styrolution, Frankfurt) mit einer Schmelze-Volumenfließrate (Melt Volume Rate MVR, bei 200 °C/5 kg Belastung, ISO 1133) von etwa 4 cm³/10 min eingesetzt.

Als Komponente C werden die folgenden Verträglichkeitsvermittler eingesetzt:
C1 sternförmiges Styrol-Butadien-Blockcopolymer Typ Styrolux^{®} (INEOS Styrolution), Butadienanteil 25 Gew.-%, Schmelze-Volumenfließrate (MVR melt flow rate) gemäß ISO 1133 von 11 cm³/10 min;
C2 lineares Styrol-Butadien-Blockcopolymer Typ Styroflex^{®} (INEOS Styrolution) der Struktur S-(B/S)-S, Butadienanteil 35 Gew.-%, Schmelze-Volumenfließrate (MVR melt flow rate) gemäß ISO 1133 von 13 cm³/10 min;
C3 Styrol-Ethylen-Propylen-Blockcopolymer (Septon 2104, Kuraray Europe);
C4 Styrol-Ethylen-Butylen-Blockcopolymer (G 1650 E, Kraton Polymers);
C5 Styrol-Ethylen-Propylen-Blockcopolymer (G 1701 E, Kraton Polymers);
C6 Polyethylen-Acrylnitril-Styrol-Copolymer (Modiper AS100, NOF Corp.);
C7 Polypropylen-Acrylnitril-Styrol-Copolymer (Modiper A3400, NOF Corp.)

Als Komponente D wurde ein Antistatikum eingesetzt.

Die Polymermischungen (Polymerblends) P1 bis P23 und V1 bis V8 wurden wie unter 1.2 beschrieben hergestellt. Die beispielhaften Polymerblends sind in der folgenden Tabelle 1 zusammengefasst. Bei den Zusammensetzungen V1 bis V8 handelt es sich um Vergleichsversuche (ohne Zugabe des Verträglichkeitsvermittlers C).

**Tabelle 1: Zusammensetzungen der Polymerblends (alle Werte in Gew.-% bezogen auf den gesamten Polymerblend)**

| Bsp | A1 | A2 | B1 | B2 | C1 | C2 | C3 | C4 | C5 | C6 | C7 | D |
|---|---|---|---|---|---|---|---|---|---|---|---|---|
| P1 | 46,0 | | | 46,0 | | | 8,0 | | | | | |
| P2 | | 46,0 | | 46,0 | | 8,0 | | | | | | |
| P3 | 23,0 | | | 69,0 | | | 8,0 | | | | | |
| P4 | 69,0 | | | 23,0 | | | 8,0 | | | | | |
| P5 | | 45,5 | | 45,5 | | | 8,0 | | | | | 1,0 |
| P6 | | 45,5 | | 45,5 | | | | 8,0 | | | | 1,0 |
| P7 | 46,0 | | | 46,0 | 8,0 | | | | | | | |
| P8 | 49,5 | | | 49,5 | | | | | | | 1,0 | |
| P9 | 48,5 | | | 48,5 | | | | | | | 3,0 | |
| P10 | 47,5 | | | 47,5 | | | | | | | 5,0 | |
| P11 | 46,0 | | | 46,0 | | | | | 8,0 | | | |
| P12 | 49,5 | | 49,5 | | | | | | | | 1,0 | |
| P13 | 48,5 | | 48,5 | | | | | | | | 3,0 | |
| P14 | 47,5 | | 47,5 | | | | | | | | 5,0 | |
| P15 | 49,5 | | | 49,5 | | | | | | 1,0 | | |
| P16 | 48,5 | | | 48,5 | | | | | | 3,0 | | |
| P17 | 47,5 | | | 47,5 | | | | | | 5,0 | | |
| P18 | 49,5 | | 49,5 | | | | | | | 1,0 | | |
| P19 | 48,5 | | 48,5 | | | | | | | 3,0 | | |
| P20 | 47,5 | | 47,5 | | | | | | | 5,0 | | |
| P21 | 46,0 | | 46,0 | | 8,0 | | | | | | | |
| P22 | 46,0 | | 46,0 | | 4,0 | | 4,0 | | | | | |
| P23 | 46,0 | | | 46,0 | 4,0 | | 4,0 | | | | | |
| V1 | 50,0 | | | 50,0 | | | | | | | | |
| V2 | 50,0 | | 50,0 | | | | | | | | | |
| V3 | | 49,5 | 49,5 | | | | | | | | | 1,0 |
| V4 | | 49,5 | | 49,5 | | | | | | | | 1,0 |
| V5 | 100 | | | | | | | | | | | |
| V6 | | 100 | | | | | | | | | | |
| V7 | | | 100 | | | | | | | | | |
| V8 | | | | 100 | | | | | | | | |

### 1.2 Herstellung der Polymerblends

Alle Materialien wurden für 14 Stunden bei 80 °C vorgetrocknet. Das teilkristalline Polyolefin A, das amorphe Polymer B, der Verträglichkeitsvermittler C und gegebenenfalls die Komponente D wurden in einem gleichläufigen Doppelschneckenextruder der Marke Process 11, Hersteller Thermo Scientific, bei einer Massetemperatur von 220°C bis 240°C compoundiert. Der Schneckendurchmesser des Doppelschneckenextruders betrug 11 mm, die Schneckendrehzahl war 220 rpm. Anschließend wurde das Material durch eine Strangdüse mit einem Durchmesser von 2,2 mm in ein Wasserbad extrudiert und granuliert. Der Durchsatz betrug zwischen 1,5 und 2,3 kg/h.

### 1.3 Charakterisierung der Blends

Die Charakterisierung der Polymerblends erfolgte an Zugprüfstäben vom Typ 1A nach ISO 527, die mittels Spritzguss hergestellt wurden.

Die Kerbschlagzähigkeit aₖ der Polymerblends wurde nach ISO 179 1 eA bestimmt. Zugversuche wurden nach ISO 527 durchgeführt. Die Ergebnisse der Prüfungen sind in Tabelle 2 aufgeführt.

Die so bestimmten mechanischen Eigenschaften der spritzgegossenen Zugprüfstäbe werden als Indiz für die Güte der Polymerblends gewertet. Als weiteres Indiz für die gute Compatibilisierung der Blends wurden transmissionselektronenspektroskopische Aufnahmen gemacht. Fig. 5a zeigt eine beispielhafte Aufnahme des erfindungsgemäßen Polymerblends P1, Fig. 5b zum Vergleich dazu eine Aufnahme des uncompatibilisierten Polymerblends V1.

**Tabelle 2: Charakterisierung der Polymerblends**

| Probe | Kerbschlagzähigkeit aₖ [kJ/m²] | Elastizitätsmodul Eₜ [MPa] | Zugfestigkeit σ_{M} [MPa] | Bruchdehnung ε_{B} [%] |
|---|---|---|---|---|
| P1 | 4,1 | 1200 | 25,7 | 52,9 |
| P2 | 1,9 | 420 | 10,8 | 8,1 |
| P3 | 5,6 | 1490 | 25,9 | 23,8 |
| P4 | 5,8 | 1460 | 28,8 | 101,9 |
| P5 | 14,4 | 241 | 12,6 | 23,9 |
| P6 | 2,7 | 438 | 9,9 | 15,5 |
| P7 | 2,1 | 1470 | 25,7 | 9,1 |
| P8 | 1,9 | 1460 | 24,5 | 2,3 |
| P9 | 1,9 | 1460 | 24,6 | 2,3 |
| P10 | 2,0 | 1450 | 24,8 | 2,4 |
| P11 | 5,0 | 962 | 18,1 | 3,2 |
| P12 | 2,9 | 1500 | 25,8 | 4,3 |
| P13 | 2,1 | 1530 | 25,6 | 3,9 |
| P14 | 2,2 | 1530 | 25,9 | 3,8 |
| P15 | 1,3 | 1500 | 24,9 | 2,1 |
| P16 | 1,3 | 1460 | 25,3 | 3,5 |
| P17 | 1,4 | 1440 | 23,2 | 1,9 |
| P18 | 2,3 | 1500 | 24,8 | 3,9 |
| P19 | 2,1 | 1440 | 24,3 | 4,0 |
| P20 | 2,3 | 1410 | 23,0 | 3,6 |
| P21 | 4,2 | 1410 | 27,2 | 10,6 |
| P22 | 4,2 | 1400 | 27,3 | 14,6 |
| P23 | 7,8 | 1220 | 25,1 | 75,5 |
| V1 | 1,9 | 1440 | 24,4 | 3,1 |
| V2 | 2,3 | 1490 | 24,2 | 4,8 |
| V3 | 3,1 | 665 | 12,5 | 4,8 |
| V4 | 2,6 | 506 | 7,7 | 7,6 |

### 1.4 Herstellung der Polymerpulver P

Die Mikronisierung der Polymerblends (Granulate hergestellt gemäß 1.2) erfolgte in zwei Stufen. Zunächst wurden die mit flüssigem Stickstoff vorgekühlten Granulate in einer Rotor-Schnellmühle (Pulverisette 14, Hersteller Fritsch) zerkleinert. Im Anschluss wurden die so erhaltenen Pulver in einer Rührwerkskugelmühle (PE5, Hersteller Netzsch) mit ZrO₂-Mahlkugeln in Ethanol feinstvermahlen.

### 1.5 Charakterisierung der Polymerpulver P

### 1.5.1 Partikelgrößenverteilung

Die Messung der Partikelgrößenverteilung erfolgte mittels Laserdiffraktometrie in einem Mastersizer 2000 (Hersteller Malvern Instruments). Exemplarisch ist die Messung für Probe P1 in Fig. 1 dargestellt. Alle hergestellten Polymerpulver wiesen einen mittleren Partikeldurchmesser D₅₀ im Bereich von 25 bis 55 µm auf.

### 1.5.2 Optische Eigenschaften

Eine wichtige optische Eigenschaft der Polymerpulver ist deren Fähigkeit die eingebrachte Energie des Lasers zu absorbieren.

Die Absorption der Pulver wurde mittels der diffusen Reflexions-Infrarot-Fourier-Transformations-Spektroskopie (DRIFTS) analysiert. Die Wellenzahl des eingesetzten Lasers im SLS-Prozess war 943 cm⁻¹, so dass die Absorption des Polymers in diesem Bereich insbesondere relevant war. Für die Analyse wurde ein FTIR-Spektrometer (Nicolet 6700, Hersteller Thermo Scientific) mit DRIFTS-Erweiterung von PIKE Technologies verwendet.

In Fig. 2 sind beispielhafte Messungen dargestellt, die eine geringe Reflexion und somit hohe Absorption der erfindungsgemäßen Pulver bei 943 cm⁻¹ belegen.

### 1.5.3 Thermische Eigenschaften

Die Abschätzung der Verarbeitungstemperatur und die Bestimmung des Verarbeitungsfensters im SLS-Prozess erfolgen typischerweise anhand von DSC-Messungen entsprechend DIN EN ISO 11357. Hierzu wurde ein Messgerät Typ Q 2000 DSC (Hersteller TA-Instruments) verwendet. Die Messungen wurden mit einer Heiz- und Kühlrate von 10 K/min unter Stickstoffatmosphäre durchgeführt. Die Probenmasse betrug etwa 5 mg.

In Fig. 3 und Fig. 4 sind beispielhaft die DSC-Kurven der erfindungsgemäßen Polymerpulver P1 und P4 gezeigt. Es wird deutlich, dass beide Polymerpulver ein vorteilhaft großes Verarbeitungsfenster (Abstand zwischen Kristallisations- und Schmelztemperatur) von etwa 44 K (Kelvin) aufweisen.

### 2.1 Durchführung der Lasersinter-Versuche

Mit den gemäß 1.4 hergestellten Polymerpulvern P1, P3, P4, P5, P12, V5-V8 wurden verschiedene selektive Lasersinter-Verfahren durchgeführt, um die Eignung der Pulver für das Selektive Lasersintern zu prüfen. Zudem wurde als Vergleich V9 ein handelsübliches PA12-Pulver für das SLS-Verfahren (PA 2200, Hersteller EOS GmbH) getestet. Die Ergebnisse sind in der Tabelle 3 zusammengefasst.

Die Versuche wurden auf einer Formiga P110 (Hersteller EOS) und auf einer DTM Sinterstation 2000 (Hersteller 3D Systems) durchgeführt. Alle Tests wurden unter Stickstoffatmosphäre durchgeführt.

Die Laserleistung wurde zwischen 4 und 25 W variiert. Die Scangeschwindigkeit, d.h. die Geschwindigkeit, mit welcher der Laserstrahl über das Pulverbett bewegt wurde, wurde zwischen 1,0 und 3,4 m/s variiert. Der Hatchabstand (auch Spurweite genannt) ist definiert als Abstand zwischen den Intensitätsmaxima zweier nebeneinander verlaufender Laserlinien und wurde zwischen 0,08 und 0,25 mm variiert. Dabei betrug die Flächenenergiedichte 0,01 bis 0,085 J/mm². Die Flächenenergiedichte berechnet sich typischerweise aus der Laserleistung dividiert durch die Scangeschwindigkeit und den Hatchabstand.

Die Pulverbetten mit den in Tabelle 1 beschriebenen Polymerpulvern P1 bis P23 wiesen eine glatte Oberfläche und klare Linien um die belichteten Polymerpartikeln herum auf.

Zur Beurteilung der Pulver sowie zum Auffinden der optimalen Einstellungen für Laserleistung, Scangeschwindigkeit und Hatchabstand wurden zunächst Einzelschichten mit einer Kantenlänge von 40 x 40 x 0,1 mm hergestellt.
Durch die Verwendung von Einzelschichten als Probekörper lässt sich in der Regel der Einfluss des Materialauftrags auf die sich ergebenden Schmelztiefen egalisieren und die Strahl-Stoff-Interaktion kann direkt analysiert werden. Die erforderliche geringe Probemenge von wenigen Gramm ermöglicht zudem meist eine effiziente Analyse der Proben.

Nachdem die optimalen Einstellungen für Laserleistung, Scangeschwindigkeit und Hatchabstand gefunden wurden, wurden Zugprüfstäbe vom Typ 1A nach ISO 527 hergestellt.

### 2.2 Beurteilung der Zugprüfstäbe erhalten durch SLS

An den nach 2.1 erhaltenen Zugprüfstäben wurde die Kerbschlagzähigkeit aₖ nach ISO 179 1eA bestimmt. Zugversuche wurden nach ISO 527 durchgeführt. Die gemessenen Werte wurden hinsichtlich der Bruchfestigkeit und des E-Moduls mit spritzgegossenen Zugprüfstäben aus den gleichen Polymerblends verglichen. Es wurde die folgende Einteilung für die mechanischen Eigenschaften verwendet:

| | | |
|---|---|---|
| + | gut | 30% unter Spritzguss |
| o | moderat | 50% unter Spritzguss |
| - | schlecht | 80% unter Spritzguss |

Die Beurteilung einiger ausgewählter Proben und Vergleichsproben ist in Tabelle 3 aufgeführt.

Die Oberflächengüte der Prüfstäbe wurde visuell und mit einem Mikroskop (Profilm3D Optical Profiler, Hersteller Filmetrics, mit 5xObjektiv) bestimmt. Hierbei wurde die folgende Einteilung verwendet:

| | | |
|---|---|---|
| ++ | sehr gut | glatt, geringer visueller Unterschied zu spritzgegossenen Teilen |
| + | gut | leicht wellig, etwas visueller Unterschied zu spritzgegossenen Teilen |
| o | moderat | rau, großer visueller Unterschied zu spritzgegossenen Teilen |
| - | schlecht | sehr rau, sehr großer visueller Unterschied zu spritzgegossenen Teilen |

Das Verarbeitungsfenster gibt den Abstand zwischen Kristallisations- und Schmelztemperatur wieder und wurde mittels Differential Scanning Calorimetry (DSC) bestimmt.

Der Volumenschwund, definiert als Abnahme des Volumens eines Bauteils beim Abkühlen von der Verarbeitungstemperatur Tₓ (Prozesstemperatur) auf Zimmertemperatur (insbesondere 20 °C), wurde durch Messung der geometrischen Längenänderung in x-, y- und z-Richtung und Multiplikation dieser drei Werte bestimmt.

Der Verzug, definiert als Änderung der Form eines Bauteils beim Abkühlen von der Verarbeitungstemperatur Tₓ (Prozesstemperatur) auf Zimmertemperatur (insbesondere 20 °C), wurde durch Messung der geometrischen Abweichung einer Bauteilkante zur geraden Linie bestimmt. Dies ist abhängig von der Bauteilgeometrie, z.B. von der Länge der Bauteilkante, so dass die Beurteilung relativ zu einem Zugprüfstab nach ISO 179 1 eA erfolgte. Als Vergleichsprobe (Referenz) diente Probe V9.

**Tabelle 3. Beurteilung der SLS-Zugprüfstäbe**

| Bsp | Oberflächengüte | Verarbeitungsfenster | | Volumenschwund | Verzug (relativ zu V9) | Mechanische Eigenschaften |
|---|---|---|---|---|---|---|
| | | [°C] | K | [%] | [% zu V9] | |
| P1 | ++ | 118-162 | 44 | 1,0 | 10 % geringer | + |
| P3 | ++ | 118-162 | 44 | 0,8 | 15 % geringer | + |
| P4 | ++ | 118-162 | 44 | 1,2 | 5 % geringer | + |
| P5 | ++ | 90-105 | 15 | 1,0 | 10 % geringer | + |
| P12 | ++ | 117-161 | 44 | 1,0 | 10 % geringer | + |
| V5 | o | 116-163 | 47 | 1,5 | 5 % höher | o |
| V6 | o | 92-106 | 14 | 1,5 | 5 % höher | o |
| V7 | - | keine Kristallisation | | 0,6 | 20 % geringer | - |
| V8 | - | keine Kristallisation | | 0,6 | 20 % geringer | - |
| V9 | + | 147-184 | 37 | 1,5 | Referenz | + |

| | | | | | | |
|---|---|---|---|---|---|---|
| (V9: PA12-Pulver, PA 2200, Hersteller EOS GmbH) | | | | | | |

## Patentansprüche

1. Thermoplastisches Polymerpulver P enthaltend:
(A) 10 bis 89,9 Gew.-%, bezogen auf das gesamte Polymerpulver P, mindestens eines teilkristallinen Polyolefins A;
(B) 10 bis 89,9 Gew.-%, bezogen auf das gesamte Polymerpulver P, mindestens eines amorphen Styrol-Polymers B;
(C) 0,1 bis 20 Gew.-%, bezogen auf das gesamte Polymerpulver P, mindestens eines Verträglichkeitsvermittlers C, ausgewählt aus der Gruppe bestehend aus Styrol-Butadien-Blockcopolymeren, Styrol-Polyolefin-Copolymeren, Acrylnitril-Styrol-Polyolefin-Copolymeren und Acrylnitril-Styrol-Butadien-Polyolefin-Copolymeren;
(D) optional 0 bis 5 Gew.-%, bezogen auf das gesamte Polymerpulver P, mindestens eines Additives und/oder Hilfsstoffes;
wobei die Summe der Gew.-% der Komponenten A, B, C und optional D zusammen 100 Gew.-% ergibt;
wobei das teilkristalline Polymer A, das amorphe Styrol-Polymer B und der Verträglichkeitsvermittler C in Form eines Polymerblends vorliegen, wobei der Begriff Polymerblend eine makroskopisch homogene Mischung aus mehreren verschiedenen Polymeren bezeichnet;
und wobei das thermoplastische Polymerpulver P einen mittleren Partikeldurchmesser D₅₀ im Bereich von 5 bis 200 µm aufweist.

2. Thermoplastisches Polymerpulver P gemäß Anspruch 1, **dadurch gekennzeichnet, dass** es sich bei dem teilkristallinen Polyolefin A um mindestens ein Polymer ausgewählt aus Polyethylen, Polypropylen und Polypropylen-Polyethylen-Copolymeren handelt.

3. Thermoplastisches Polymerpulver P gemäß Anspruch 1 oder 2, **dadurch gekennzeichnet, dass** sich bei dem amorphen Styrol-Polymer B um mindestens ein Polymer ausgewählt aus Styrol-Acrylnitril-Copolymeren, Acrylnitril-Butadien-Styrol-Copolymeren, Acrylat-Styrol-Acrylnitril-Copolymeren, Methylmethacrylat-Acrylnitril-Butadien-Styrol-Copolymeren, Methylmethacrylat-Butadien-Styrol-Copolymeren, α(alpha)-Methylstyrol-Acrylnitril-Copolymeren, Styrol-Methylmethacrylat-Copolymeren, amorphem Polystyrol und schlagzäh-modifiziertem Polystyrol handelt.

4. Thermoplastisches Polymerpulver P gemäß einem der Ansprüche 1 bis 3, **dadurch gekennzeichnet, dass** es sich bei dem amorphen Styrol-Polymer B um mindestens ein Styrol-Polymer oder Styrol-Copolymer handelt, welches eine Schmelz-Volumenfließrate, gemessen gemäß ISO 1133 im Bereich von 2 bis 60 cm³/10 min aufweist.

5. Thermoplastisches Polymerpulver P gemäß einem der Ansprüche 1 bis 4, **dadurch gekennzeichnet, dass** es sich bei dem Verträglichkeitsvermittler C um ein Styrol-Butadien-Blockcopolymer oder die Kombination eines Styrol-Butadien-Blockcopolymers und eines weiteren Polymers ausgewählt aus Styrol-Polyolefin-Copolymeren, Acrylnitril-Styrol-Polyolefin-Copolymeren und Acrylnitril-Styrol-Butadien-Polyolefin-Copolymeren, handelt.

6. Thermoplastisches Polymerpulver P gemäß einem der Ansprüche 1 bis 5, **dadurch gekennzeichnet, dass** das Polymerpulver P einen Partikeldurchmesser D₉₀ von weniger als 200 µm aufweist.

7. Thermoplastisches Polymerpulver P gemäß einem der Ansprüche 1 bis 6 enthaltend:
(A) 20 bis 79,9 Gew.-%, bezogen auf das gesamte Polymerpulver P, mindestens eines Polyolefins, ausgewählt aus Polyethylen (PE), Polypropylen (PP) und Polypropylen-Polyethylen-Copolymeren, als teilkristallines Polyolefin A;
(B) 20 bis 79,9 Gew.-%, bezogen auf das gesamte Polymerpulver P, mindestens eines Polymers ausgewählt aus Styrol-Acrylnitril-Copolymeren, Acrylnitril-Butadien-Styrol-Copolymeren, Acrylat-Styrol-Acrylnitril-Copolymeren, Methylmethacrylat-Acrylnitril-Butadien-Styrol-Copolymeren, Methylmethacrylat-Butadien-Styrol-Copolymeren, α(alpha)-Methylstyrol-Acrylnitril-Copolymeren, Styrol-Methylmethacrylat-Copolymeren, amorphem Polystyrol, schlagzäh-modifiziertem Polystyrol, als amorphes Styrol-Polymer B;
(C) 0,1 bis 20 Gew.-%, bezogen auf das gesamte Polymerpulver P, eines Polymers ausgewählt aus der Gruppe bestehend aus Styrol-Butadien-Blockcopolymeren, Styrol-Polyolefin-Copolymeren, Acrylnitril-Styrol-Polyolefin-Copolymeren und Acrylnitril-Styrol-Butadien-Polyolefin-Copolymeren, als Verträglichkeitsvermittler C;
(D1) 0 bis 3 Gew.-% mindestens eines Siliciumdioxid-Nanopartikel-Pulvers oder Siliconadditives als Rieselhilfsmittel, und
(D2) optional 0 bis 3 Gew.-%, bezogen auf das gesamte Polymerpulver P, mindestens eines weiteren Additives und/oder Hilfsstoffes als weitere Komponente D.

8. Verfahren zur Herstellung eines thermoplastischen Polymerpulvers P gemäß einem der Ansprüche 1 bis 7 umfassend die folgenden Schritte:
i) Bereitstellen einer festen Mischung enthaltend die Komponenten A, B, C und optional D;
ii) mechanisches Zerkleinern der festen Mischungen, wobei ein thermoplastisches Polymerpulver P erhalten wird, das einen mittleren Partikeldurchmesser D₅₀ im Bereich von 5 bis 200 µm aufweist.

9. Verfahren zur Herstellung eines thermoplastischen Polymerpulvers P gemäß Anspruch 8, **dadurch gekennzeichnet, dass** Schritt i) das Vermischen der Komponenten A, B und C im flüssigen Zustand bei einer Temperatur im Bereich von 200 bis 250 °C umfasst.

10. Verfahren zur Herstellung eines thermoplastischen Polymerpulvers P gemäß einem der Ansprüche 8 oder 9, **dadurch gekennzeichnet, dass** das mechanische Zerkleinern der festen Mischungen in Schritt ii) mittels Mahlen, Mikronisieren, Gefriermahlen oder Jet-Mahlen erfolgt.

11. Verfahren zur Herstellung eines dreidimensionalen Bauteils mittels des Selektiven Lasersinterns umfassend die Schritte:
x) Einstellen einer Verarbeitungstemperatur Tₓ in einem Bauraum und Bereitstellen einer Pulverschicht, bestehend aus dem thermoplastischen Polymerpulver P nach einem der Ansprüche 1 bis 7, im Bauraum;
xi) ortsaufgelöstes Aufschmelzen mittels eines gerichteten Strahls elektromagnetischer Strahlung und anschließendes Erstarren des thermoplastischen Polymerpulvers P in einem definierten Bereich;
wobei die Schritte x) und xi) mehrmals durchgeführt werden, so dass durch Verbinden der Bereiche des aufgeschmolzenen und wieder erstarrten Polymers schichtweise ein dreidimensionales Bauteil erhalten wird.

12. Verfahren zur Herstellung eines dreidimensionalen Bauteils gemäß Anspruch 11, **dadurch gekennzeichnet, dass** die Pulverschicht eine Dicke im Bereich von 10 bis 400 µm aufweist.

13. Verfahren zur Herstellung eines dreidimensionalen Bauteils gemäß Anspruch 11 oder 12, **dadurch gekennzeichnet, dass** die Verarbeitungstemperatur Tₓ im Bereich von 80 bis 250 °C liegt, wobei sich die Temperatur während der Durchführung der einzelnen Schritte x) und xi) um höchstens +/- 10 % ausgehend von der eingestellten Verarbeitungstemperatur Tₓ verändert.

14. Verfahren zur Herstellung eines dreidimensionalen Bauteils gemäß einem der Ansprüche 11 bis 13, **dadurch gekennzeichnet, dass** der Volumenschwund und/oder der Verzug bei der Herstellung des dreidimensionalen Bauteils mittels des Selektiven Lasersinterns unter Verwendung des erfindungsgemäßen Polymerpulvers P um mindestens 10 % verringert ist, im Vergleich zum Volumenschwund oder Verzug bei Verwendung eines Polymerpulvers umfassend das entsprechende teilkristalline Polyolefin A als einzige polymere Komponente.

15. Verwendung des thermoplastischen Polymerpulvers P nach einem der Ansprüche 1 bis 7 zur Herstellung eines dreidimensionalen Bauteils mittels Selektiven Lasersinterns oder verwandter Verfahren der additiven Fertigung.

## Claims

1. Thermoplastic polymer powder P comprising:
(A) 10% to 89.9% by weight, based on the overall polymer powder P, of at least one semicrystalline polyolefin A;
(B) 10% to 89.9% by weight, based on the overall polymer powder P, of at least one amorphous styrene polymer B;
(C) 0.1% to 20% by weight, based on the overall polymer powder P, of at least one compatibilizer C selected from the group consisting of styrene-butadiene block copolymers, styrene-polyolefin copolymers, acrylonitrile-styrene-polyolefin copolymers and acrylonitrile-styrene-butadiene-polyolefin copolymers;
(D) optionally 0% to 5% by weight, based on the overall polymer powder P, of at least one additive and/or auxiliary;
where the sum total of the percentages by weight of components A, B, C and optionally D together is 100% by weight;
where the semicrystalline polymer A, the amorphous styrene polymer B and the compatibilizer C are in the form of a polymer blend, where the term "polymer blend" refers to a macroscopically homogeneous mixture of multiple different polymers;
and where the thermoplastic polymer powder P has a median particle diameter D₅₀ in the range from 5 to 200 µm.

2. Thermoplastic polymer powder P according to Claim 1, **characterized in that** the semicrystalline polyolefin A is at least one polymer selected from polyethylene, polypropylene and polypropylene-polyethylene copolymers.

3. Thermoplastic polymer powder P according to Claim 1 or 2, **characterized in that** the amorphous styrene polymer B is at least one polymer selected from styrene-acrylonitrile copolymers, acrylonitrile-butadiene-styrene copolymers, acrylate-styrene-acrylonitrile copolymers, methyl methacrylate-acrylonitrile-butadiene-styrene copolymers, methyl methacrylate-butadiene-styrene copolymers, α(alpha)-methylstyrene-acrylonitrile copolymers, styrene-methyl methacrylate copolymers, amorphous polystyrene and impact-modified polystyrene.

4. Thermoplastic polymer powder P according to any of Claims 1 to 3, **characterized in that** the amorphous styrene polymer B is at least one styrene polymer or styrene copolymer having a melt volume flow rate, measured to ISO 1133, in the range from 2 to 60 cm³/10 min.

5. Thermoplastic polymer powder P according to any of Claims 1 to 4, **characterized in that** the compatibilizer C is a styrene-butadiene block copolymer or the combination of a styrene-butadiene block copolymer and a further polymer selected from styrene-polyolefin copolymers, acrylonitrile-styrene-polyolefin copolymers and acrylonitrile-styrene-butadiene-polyolefin copolymers.

6. Thermoplastic polymer powder P according to any of Claims 1 to 5, **characterized in that** the polymer powder P has a particle diameter D₉₀ of less than 200 µm.

7. Thermoplastic polymer powder P according to any of Claims 1 to 6, comprising:
(A) 20% to 79.9% by weight, based on the overall polymer powder P, of at least one polyolefin selected from polyethylene (PE), polypropylene (PP) and polypropylene-polyethylene copolymers as semicrystalline polyolefin A;
(B) 20% to 79.9% by weight, based on the overall polymer powder P, of at least one polymer selected from styrene-acrylonitrile copolymers, acrylonitrile-butadiene-styrene copolymers, acrylate-styrene acrylonitrile copolymers, methyl methacrylate-acrylonitrile-butadiene-styrene copolymers, methyl methacrylate-butadiene-styrene copolymers, α(alpha)-methylstyrene-acrylonitrile copolymers, styrene-methyl methacrylate copolymers, amorphous polystyrene and impact-modified polystyrene as amorphous styrene polymer B;
(C) 0.1% to 20% by weight, based on the overall polymer powder P, of a polymer selected from the group consisting of styrene-butadiene block copolymers, styrene-polyolefin copolymers, acrylonitrile-styrene-polyolefin copolymers and acrylonitrile-styrene-butadiene-polyolefin copolymers as compatibilizer C;
(D1) 0% to 3% by weight of at least one silicon dioxide nanoparticle powder or silicone additive as free-flow aid, and
(D2) optionally 0% to 3% by weight, based on the overall polymer powder P, of at least one further additive and/or auxiliary as further component D.

8. Process for producing a thermoplastic polymer powder P according to any of Claims 1 to 7, comprising the following steps:
i) providing a solid-state mixture comprising components A, B, C and optionally D;
ii) mechanically comminuting the solid-state mixtures to obtain a thermoplastic polymer powder P having a median particle diameter D₅₀ in the range from 5 to 200 µm.

9. Process for producing a thermoplastic polymer powder P according to Claim 8, **characterized in that** step i) comprises the mixing of components A, B and C in the liquid state at a temperature in the range from 200 to 250°C.

10. Process for producing a thermoplastic polymer powder P according to either of claims 8 and 9, **characterized in that** the mechanical comminution of the solid-state mixtures in step ii) is effected by means of grinding, micronizing, cryogenic grinding or jet grinding.

11. Process for producing a three-dimensional component by means of selective laser sintering, comprising the steps of:
x) setting a processing temperature Tₓ in a build chamber and providing a powder layer consisting of the thermoplastic polymer powder P according to any of Claims 1 to 7 in the build chamber;
xi) spatially resolved melting by means of a directed beam of electromagnetic radiation, followed by solidification of the thermoplastic polymer powder P in a defined region;
where steps x) and xi) are performed repeatedly, such that binding of the regions of the melted and resolidified polymer forms a three-dimensional component layer by layer.

12. Process for producing a three-dimensional component according to Claim 11, **characterized in that** the powder layer has a thickness in the range from 10 to 400 µm.

13. Process for producing a three-dimensional component according to Claim 11 or 12, **characterized in that** the processing temperature Tₓ is in the range from 80 to 250°C, where the temperature during the performance of the individual steps x) and xi) varies by not more than +/- 10% from the processing temperature Tₓ set.

14. Process for producing a three-dimensional component according to any of Claims 11 to 13, **characterized in that** volume shrinkage and/or warpage in the course of production of the three-dimensional component is reduced by at least 10% by means of selective laser sintering using the polymer powder P of the invention compared to the volume shrinkage or warpage when using a polymer powder comprising the corresponding semicrystalline polyolefin A as the sole polymeric component.

15. Use of the thermoplastic polymer powder P according to any of Claims 1 to 7 for production of a three-dimensional component by means of selective laser sintering or related methods of additive manufacture.

## Revendications

1. Poudre polymère P thermoplastique contenant :
(A) 10 à 89,9% en poids, par rapport à la totalité de la poudre polymère P, d'au moins une polyoléfine partiellement cristalline A ;
(B) 10 à 89,9% en poids, par rapport à la totalité de la poudre polymère P, d'au moins un polymère amorphe de styrène B ;
(C) 0,1 à 20% en poids, par rapport à la totalité de la poudre polymère P, d'au moins un promoteur de compatibilité C, choisi dans le groupe constitué par les copolymères séquencés de styrène-butadiène, les copolymères de styrène-polyoléfine, les copolymères d'acrylonitrile-styrène-polyoléfine et les copolymères d'acrylonitrile-styrène-butadiène-polyoléfine ;
(D) éventuellement 0 à 5% en poids, par rapport à la totalité de la poudre polymère P, d'au moins un additif et/ou adjuvant ;
la somme des % en poids des composants A, B, C et éventuellement D valant ensemble 100% en poids ;
le polymère partiellement cristallin A, le polymère amorphe de styrène B et le promoteur de compatibilité C se trouvant sous forme d'un mélange polymère, le concept mélange polymère désignant un mélange macroscopiquement homogène de plusieurs polymères différents ;
et la poudre polymère P thermoplastique présentant un diamètre moyen de particule D₅₀ dans la plage de 5 à 200 µm.

2. Poudre polymère P thermoplastique selon la revendication 1, **caractérisée en ce qu'**il s'agit, pour la polyoléfine partiellement cristalline A, d'au moins un polymère choisi parmi le polyéthylène, le polypropylène et les copolymères de polypropylène-polyéthylène.

3. Poudre polymère P thermoplastique selon la revendication 1 ou 2, **caractérisée en ce qu'**il s'agit, pour le polymère amorphe de styrène B, d'au moins un polymère choisi parmi les copolymères de styrène-acrylonitrile, les copolymères d'acrylonitrile-butadiène-styrène, les copolymères d'acrylate-styrène-acrylonitrile, les copolymères de méthacrylate de méthyle-acrylonitrile-butadiène-styrène, les copolymères de méthacrylate de méthyle-butadiène-styrène, les copolymères d'α(alpha)-méthylstyrène-acrylonitrile, les copolymères de styrène-méthacrylate de méthyle, le polystyrène amorphe et le polystyrène à résilience modifiée.

4. Poudre polymère P thermoplastique selon l'une quelconque des revendications 1 à 3, **caractérisée en ce qu'**il s'agit, pour le polymère amorphe de styrène B, d'au moins un polymère de styrène ou copolymère de styrène, qui présente un indice de fluidité volumique à chaud, mesuré selon la norme ISO 1133, dans la plage de 2 à 60 cm³/10 min.

5. Poudre polymère P thermoplastique selon l'une quelconque des revendications 1 à 4, **caractérisée en ce qu'**il s'agit, pour le promoteur de compatibilité C, d'un copolymère séquencé de styrène-butadiène ou de la combinaison d'un copolymère séquencé de styrène-butadiène et d'un autre polymère choisi parmi les copolymères de styrène-polyoléfine, les copolymères d'acrylonitrile-styrène-polyoléfine et les copolymères d'acrylonitrile-styrène-butadiène-polyoléfine.

6. Poudre polymère P thermoplastique selon l'une quelconque des revendications 1 à 5, **caractérisée en ce que** la poudre polymère P présente un diamètre de particule D₉₀ inférieur à 200 µm.

7. Poudre polymère P thermoplastique selon l'une quelconque des revendications 1 à 6, contenant :
(A) 20 à 79,9% en poids, par rapport à la totalité de la poudre polymère P, d'au moins une polyoléfine, choisie parmi le polyéthylène (PE), le polypropylène (PP) et les copolymères de polypropylène-polyéthylène, en tant que polyoléfine partiellement cristalline A ;
(B) 20 à 79,9% en poids, par rapport à la totalité de la poudre polymère P, d'au moins un polymère choisi parmi les copolymères de styrène-acrylonitrile, les copolymères d'acrylonitrile-butadiène-styrène, les copolymères d'acrylate-styrène-acrylonitrile, les copolymères de méthacrylate de méthyle-acrylonitrile-butadiène-styrène, les copolymères de méthacrylate de méthyle-butadiène-styrène, les copolymères d'α(alpha)-méthylstyrène-acrylonitrile, les copolymères de styrène-méthacrylate de méthyle, le polystyrène amorphe et le polystyrène à résilience modifiée, en tant que polymère amorphe de styrène B ;
(C) 0,1 à 20% en poids, par rapport à la totalité de la poudre polymère P, d'un polymère choisi dans le groupe constitué par les copolymères séquencés de styrène-butadiène, les copolymères de styrène-polyoléfine, les copolymères d'acrylonitrile-styrène-polyoléfine et les copolymères d'acrylonitrile-styrène-butadiène-polyoléfine, en tant que promoteur de compatibilité C ;
(D1) 0 à 3% en poids d'au moins une poudre de nanoparticules de dioxyde de silicium ou un additif à base de silicium en tant qu'adjuvant d'écoulement et
(D2) éventuellement 0 à 3% en poids, par rapport à la totalité de la poudre polymère P, d'au moins un autre additif et/ou adjuvant en tant qu'autre composant D.

8. Procédé pour la préparation d'une poudre polymère P thermoplastique selon l'une quelconque des revendications 1 à 7, comprenant les étapes suivantes :
i) préparation d'un mélange solide contenant les composants A, B, C et éventuellement D ;
ii) broyage mécanique du mélange solide, une poudre polymère P thermoplastique étant obtenue qui présente un diamètre moyen de particule D₅₀ dans la plage de 5 à 200 µm.

9. Procédé pour la préparation d'une poudre polymère P thermoplastique selon la revendication 8, **caractérisé en ce que** l'étape i) comprend le mélange des composants A, B et C à l'état liquide à une température dans la plage de 200 à 250°C.

10. Procédé pour la préparation d'une poudre polymère P thermoplastique selon l'une quelconque des revendications 8 ou 9, **caractérisé en ce que** le broyage mécanique du mélange solide dans l'étape ii) est réalisé par broyage, micronisation, broyage cryogène ou broyage par jets.

11. Procédé pour la fabrication d'une pièce tridimensionnelle par frittage sélectif par laser, comprenant les étapes :
x) réglage d'une température de mise en œuvre Tₓ dans un espace de construction et mise à disposition d'une couche de poudre, constituée par la poudre polymère P thermoplastique selon l'une quelconque des revendications 1 à 7, dans l'espace de construction ;
xi) fusion à résolution locale au moyen d'un rayon dirigé de rayonnement électromagnétique et solidification consécutive de la poudre polymère P thermoplastique dans une zone définie ;
les étapes x) et xi) étant réalisées plusieurs fois de telle sorte que par liaison des zones de polymère fondu et de nouveau solidifié, on obtient par stratification une pièce tridimensionnelle.

12. Procédé pour la fabrication d'une pièce tridimensionnelle selon la revendication 11, **caractérisé en ce que** la couche de poudre présente une épaisseur dans la plage de 10 à 400 µm.

13. Procédé pour la fabrication d'une pièce tridimensionnelle selon la revendication 11 ou 12, **caractérisé en ce que** la température de mise en œuvre Tₓ se situe dans la plage de 80 à 250°C, la température changeant pendant la réalisation des différentes étapes x) et xi) d'au plus +/- 10% partant de la température de mise en œuvre Tₓ réglée.

14. Procédé pour la fabrication d'une pièce tridimensionnelle selon l'une quelconque des revendications 11 à 13, **caractérisé en ce que** le retrait volumique et/ou la défaillance lors de la fabrication de la pièce tridimensionnelle au moyen d'un frittage sélectif par laser à l'aide de la poudre polymère P selon l'invention est/sont réduit(e) (s) d'au moins 10%, par rapport au retrait volumique ou à la défaillance lors de l'utilisation d'une poudre polymère comprenant la polyoléfine partiellement cristalline A correspondante en tant qu'unique composant polymère.

15. Utilisation de la poudre polymère P thermoplastique selon l'une quelconque des revendications 1 à 7 pour la fabrication d'une pièce tridimensionnelle par frittage sélectif par laser ou par des procédés apparentés de la fabrication additive.
